# EUROPEAN PATENT APPLICATION

(11) **EP 2 306 330 A2**
(43) Date of publication of application: **06.04.2011**
(21) Application number: 10174190.8
(22) Date of filing: 26.08.2010
(51) Int. Cl.: G06F 13/42

(54) **Management server, information processing terminal, information processing apparatus, information processing system, and information processing method**

(30) Priority: 04.09.2009 JP 2009205309
(71) Applicant: FeliCa Networks, Inc., Tokyo, 141-0032 (JP)
(72) Inventor: Sakai, Takahiro, Tokyo 141-0032 (JP); Nakamura, Hiroshi, Tokyo 141-0032 (JP); One, Hiromoto, Tokyo 141-0032 (JP); Nagasawa, Hiroyuki, Tokyo 141-0032 (JP); Tanabe, Tatsufumi, Tokyo 141-0032 (JP)
(74) Representative: Thévenet, Jean-Bruno

(57) **Abstract**

Distribution information is stored in an information processing apparatus (400) and includes benefit information. A coupon identifier (ID), which identifies the benefit information, is stored in a memory disposed within an information processing terminal (200). A request for the coupon ID is transmitted from the information processing apparatus (400) to the information processing terminal (200) and is received at the information processing terminal (200). The coupon ID is read from the memory disposed within the information processing terminal (200) based on the received request, is transmitted from the information processing terminal to the information processing apparatus (400), and is received at the information processing apparatus (400).

## Description

### CROSS-REFERENCE TO RELATED APPLICATIONS

The present application contains subject matter related to that disclosed in Japanese Patent Application No. JP 2009-205309, filed in the Japan Patent Office on September 4, 2009.

### BACKGROUND OF THE INVENTION

### Field of the Invention

The present invention relates to a management server, an information processing terminal, an information processing apparatus, an information processing system, and an information processing method.

### Description of the Related Art

In recent years, an information processing terminal capable of communicating with a reader/writer (or an information processing apparatus having the reader/writer function) by means of wireless communication, such as a non-contact type IC (Integrated Circuit) card and a mobile telephone having a non-contact type IC chip, are coming into wide use.

The reader/writer and the information processing terminal such as an IC card and a portable telephone communicate with each other by using a magnetic field (carrier wave) having a predetermined frequency such as 13.56 MHz. More specifically, the reader/writer transmits a carrier wave carrying a carrier wave signal. Then, the information processing terminal such as an IC card uses an antenna to receive the carrier wave, and uses load modulation to reply a response signal to the received carrier wave signal. In this way, the reader/writer and the information processing terminal can communicate with each other.

The above information processing terminal has a tamper-resistant IC chip, and accordingly, can safely perform transmission/reception and update of data susceptible to tampering, such as data electronic money and data for receiving benefit associated with service. Therefore, various kinds of services using the information processing terminal having the IC chip capable of communicating with the above reader/writer by means of non-contact type communication have widely spread in the society. Moreover, as the services have become available more widely, information processing terminals having non-contact type IC chips such as IC cards and portable telephones have further spread.

Under such circumstances, a technique for giving benefit provided in association with service has been developed. For example, Japanese Patent No. 3981115 describes a technique for inferring, based on purchase history, an information processing terminal with which a user inputs intent of purchase of an item, wherein benefit information related to benefit is transmitted to the inferred information processing terminal.

### SUMMARY

According to an aspect of the invention, an information processing terminal includes a communication section, a memory, and a processor. The communication section communicates with an external device. The memory stores a coupon identifier (ID) which identifies benefit information stored outside of the information processing terminal. The processor controls communication carried out by the communication section, including: (i) receiving a request from the external device for the coupon ID, (ii) reading the coupon ID from the memory based on the received request, and (iii) transmitting the coupon ID to the external device.

In accordance with the above aspect of the invention, the benefit information may be associated with at least one of (i) a transaction or (ii) a type of transaction. The communication section may carry out communication with the external device using at least one of (i) wireless communication or (ii) wired communication. The information processing terminal may be a mobile device.

According to another aspect of the invention, an integrated circuit (IC) chip is disposable within an information processing terminal and includes a memory and a processor. The memory stores a coupon identifier (ID) which identifies benefit information stored outside of the information processing terminal. The processor controls communication between the information processing terminal and an external device, including: (i) receiving a request from the external device for the coupon ID, (ii) reading the coupon ID from the memory based on the received request, and (iii) transmitting the coupon ID to the external device.

In accordance with this aspect of the invention, the benefit information may be associated with at least one of (i) a transaction or (ii) a type of transaction.

According to a further aspect of the invention, an information processing apparatus includes a communication unit, a storage unit, and a control unit. The communication unit communicates with at least one information processing terminal. The storage unit stores distribution information which includes benefit information. The control unit controls the communication carried out by the communication unit, including transmitting a request to the at least one information processing terminal for a coupon identifier (ID) which identifies the benefit information, and receiving the requested coupon ID from the at least one information processing terminal.

In accordance with this aspect of the invention, the control unit may determine whether the received coupon ID is valid, and in response to the received coupon ID being determined to be valid, may carry out settlement processing using at least a portion of the stored distribution information. The control unit may determine whether the stored distribution information is available, and in response to the stored distribution information being determined to be available, may carry out settlement processing using at least a portion of the stored distribution information. The distribution information may further include at least one of: (a) information regarding a source associated with the benefit information, (b) information regarding an item associated with the benefit information, (c) information regarding a region associated with the benefit information, (d) information regarding a service provider associated with the benefit information, (e) information regarding a location associated with the benefit information, (f) information regarding a time period associated with the benefit information, (g) information regarding an announcement medium associated with the benefit information, and (h) information regarding a limitation of use associated with the benefit information. The benefit information may be associated with at least one of (i) a transaction or (ii) a type of transaction.

According to a still further aspect of the invention, a management server includes a communication unit, a storage unit, and a control unit. The communication unit communicates with at least one information processing apparatus. The storage unit stores identification information identifying the at least one information processing apparatus and related information about attributes associated with the at least one information processing apparatus, and stores distribution information which includes benefit information. The control unit includes a transmission request unit and an information processing unit. The transmission request unit receives, through the communication unit, a request for distribution information from the at least one information processing apparatus. The information processing unit (i) selects at least a portion of the stored distribution information based on the stored attributes associated with the at least one information processing apparatus, the selected distribution information including the benefit information, and (ii) transmits the selected distribution information to the at least one information processing apparatus through the communication unit.

In accordance with such aspect of the invention, the control unit may further include an information management unit that updates the stored distribution information in response to the selected distribution information being transmitted to the at least one information processing apparatus. The benefit information may be associated with at least one of (i) a transaction or (ii) a type of transaction. The request for distribution information may include at least one of: (a) the identification information identifying the at least one information processing apparatus, (b) information regarding a region associated with a service, (c) information regarding a source associated with the service, or (d) information regarding a location associated with the service. The related information may include at least one of: (a) information regarding a region associated with the at least one information processing apparatus, (b) information regarding a source associated with the at least one information processing apparatus, (c) information regarding a location associated with the at least one information processing apparatus, or (d) information regarding communication with the at least one information processing apparatus

According to yet another aspect of the invention, a system includes an information processing terminal, a reader/writer apparatus, and an information processing apparatus. The information processing apparatus includes a communication unit, a storage unit, and a control unit. The communication unit communicates with the information processing terminal through the reader/writer apparatus. The storage unit stores distribution information which includes benefit information. The control unit controls communication carried out by the communication unit including transmitting a request to the information processing terminal for a coupon identifier (ID) which identifies the distribution information stored in the storage unit, and receiving the requested coupon ID from the information processing terminal. The information processing terminal includes a communication section, a memory, and a processor. The communication section communicates with the information processing apparatus through the reader/writer apparatus. The memory stores the coupon ID. The processor controls communication with the information processing apparatus, including (i) receiving the request from the information processing apparatus for the coupon ID, (ii) reading the coupon ID from the memory based on the received request, and (iii) transmitting the coupon ID to the information processing apparatus.

In accordance with this aspect of the invention, the communication unit of the information processing apparatus and the communication section of the information processing terminal may communicate with each other through the reader/writer apparatus when the information processing terminal is within a predefined distance from the reader/writer apparatus.

A yet further aspect of the invention is an information processing method. Distribution information is stored in an information processing apparatus and includes benefit information. A coupon identifier (ID), which identifies the benefit information, is stored in a memory disposed within an information processing terminal. A request for the coupon ID is transmitted from the information processing apparatus to the information processing terminal and is received at the information processing terminal. The coupon ID is read from the memory disposed within the information processing terminal based on the received request, is transmitted from the information processing terminal to the information processing apparatus, and is received at the information processing apparatus.

In accordance with such aspect of the invention, whether the received coupon ID is valid may be determined at the information processing apparatus, and in response to the received coupon ID being determined to be valid, settlement processing may be carried out at the information processing apparatus using at least a portion of the stored distribution information.

### BRIEF DESCRIPTION OF THE DRAWINGS

Embodiments of the present invention will now be described with reference to the accompanying drawings, throughout which like parts are referred to by like references, and in which:

FIG. 1 is an explanatory diagram illustrating an overview of an information processing system according to an embodiment of the present invention.

FIG. 2 is an explanatory diagram illustrating an example of distribution information element stored in a management server according to the embodiment of the present invention.

FIG. 3 is an explanatory diagram illustrating an example of announcement source information according to the embodiment of the present invention.

FIG. 4 is an explanatory diagram illustrating an example of processing related to recording of distribution data to an information processing terminal in an information processing system according to the embodiment of the present invention.

FIG. 5 is an explanatory diagram illustrating an example of access history information element recorded in a distribution server according to the embodiment of the present invention.

FIG. 6 is a flow diagram illustrating an example of distribution data acquisition information element generation processing in a distribution server according to the embodiment of the present invention.

FIG. 7 is an explanatory diagram illustrating an example of a distribution log recorded in a distribution server according to the embodiment of the present invention.

FIG. 8 is an explanatory diagram illustrating the first example of processing related to providing of benefit service in an information processing system according to the embodiment of the present invention.

FIG. 9 is a flow diagram illustrating an example of distribution information element transmission processing in a management server according to the embodiment of the present invention.

FIG. 10 is an explanatory diagram illustrating an example of a recording method of distribution information element in an information processing apparatus according to the embodiment of the present invention.

FIG. 11 is an explanatory diagram illustrating an example of the recording method of distribution information element in the information processing apparatus according to the embodiment of the present invention.

FIG. 12 is an explanatory diagram illustrating an example of the recording method of distribution information element in the information processing apparatus according to the embodiment of the present invention.

FIG. 13 is a flow diagram illustrating an example of distribution data use determination processing in the information processing apparatus according to the embodiment of the present invention.

FIG. 14 is an explanatory diagram illustrating an example of a distribution data use log recorded by the information processing apparatus according to the embodiment of the present invention.

FIG. 15 is an explanatory diagram illustrating an example of a log related to providing of benefit service in the information processing system according to the embodiment of the present invention.

FIG. 16 is an explanatory diagram illustrating the second example of processing related to providing of benefit service in the information processing system according to the embodiment of the present invention.

FIG. 17 is a flow diagram illustrating an example of distribution information element request processing in the information processing apparatus according to the embodiment of the present invention.

FIG. 18 is a flow diagram illustrating an example of distribution information element transmission processing in the management server according to the embodiment of the present invention.

FIG. 19 is an explanatory diagram illustrating an example of the management server according to the embodiment of the present invention.

FIG. 20 is an explanatory diagram illustrating an example of hardware configuration of the management server according to the embodiment of the present invention.

FIG. 21 is an explanatory diagram illustrating an example of configurations of a reader/writer and the information processing terminal according to the embodiment of the present invention.

FIG. 22 is an explanatory diagram illustrating an example of configuration of the information processing apparatus according to the embodiment of the present invention.

FIG. 23 is an explanatory diagram illustrating an example of hardware configuration of the information processing apparatus according to the embodiment of the present invention.

### DETAILED DESCRIPTION

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

The description will be made in the following order:
1. Information processing system according to the embodiment of the present invention.
2. Program according to the embodiment of the present invention.

### (Information processing system according to the embodiment of the present invention)

An overview of an information processing system 1000 according to the embodiment of the present invention (which may be hereinafter referred to as "information processing system 1000") will be described before explaining the configuration of each apparatus constituting an information processing system according to the embodiment of the present invention.

### [Overview of information processing system 1000]

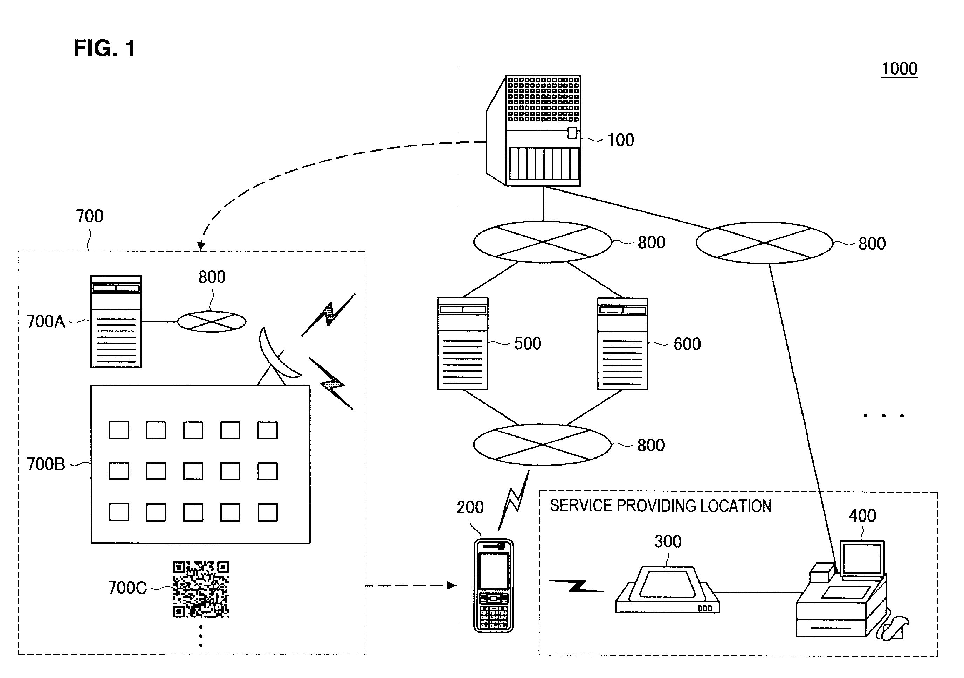

FIG. 1 is an explanatory diagram illustrating an overview of the information processing system 1000 according to the embodiment of the present invention. With reference to FIG. 1, the information processing system 1000 includes a management server 100, an information processing terminal 200, a reader/writer 300, an information processing apparatus 400, a distribution server 500, and a distribution data management server 600. The information processing system 1000 has an announcement information element providing source 700 capable of providing announcement information element (described later) to the information processing terminal 200.

In Fig. 1, the information processing system 1000 includes three servers, i.e., the management server 100, the distribution server 500, and the distribution data management server 600. However, the information processing system according to the embodiment of the present invention is not limited to the above configuration. For example, in the information processing system according to the embodiment of the present invention, one apparatus may achieve the roles of the management server 100, the distribution server 500, and the distribution data management server 600, which are shown in FIG. 1. Alternatively, one apparatus may achieve the roles of two servers.

Although FIG. 1 shows one set of information processing terminal 200, the number of information processing terminals in the information processing system according to the embodiment of the present invention is not limited thereto. For example, in the information processing system according to the embodiment of the present invention, a plurality of information processing terminals may be arranged for the users (this includes a case where one user owns a plurality of information processing terminals). In the following explanation, attention is given to the information processing terminal 200 shown in FIG. 1.

In FIG. 1, the reader/writer 300 and the information processing apparatus 400 are arranged as separate apparatuses, but the configuration of the information processing system according to the embodiment of the present invention is not limited thereto. For example, the information processing apparatus according to the embodiment of the present invention may include the functions of the reader/writer 300, namely, the reader/writer 300 and the information processing apparatus 400 shown in FIG. 1 may be integrally formed as one apparatus. In the example of FIG. 1, the reader/writer 300 and the information processing apparatus 400 are installed at a service-providing location (for example, at a shop). Alternatively, a plurality of reader/writers and information processing apparatuses according to the embodiment of the present invention may be installed at the service-providing location. Alternatively, the reader/writer and the information processing apparatus according to the embodiment of the present invention may be installed at each of the service-providing location. Although not shown in FIG. 1, the information processing system according to the embodiment of the present invention may include a gateway server (not shown) arranged between the management server 100 and each information processing apparatus so as to relay communication between the management server 100 and each information processing apparatus. In the above case, for example, the information processing system according to the embodiment of the present invention may have gateway servers (not shown) for respective regions and respective distributors.

In Fig. 1, the information processing terminal 200 is assumed to be a portable telephone, and the information processing apparatus 400 is assumed to be a POS (Point of Sale System). However, it is to be understood that the information processing terminal 200 and the information processing apparatus 400 according to the embodiment of the present invention are not limited thereto.

The management server 100 is connected via a network 800 (or directly) with each of the information processing apparatus 400, the distribution server 500, and the distribution data management server 600. On the other hand, the information processing terminal 200 is connected via the network 800 (or directly) with the distribution server 500, the distribution data management server 600, and the later-described announcement information providing server 700A. It should be noted that in the embodiment of the present invention, the "connection" means, for example, a state where communication can be made (or causing the apparatus to be a state where communication can be made).

Examples of the network 800 include, but not limited to, a wired network such as a LAN (Local Area Network) and a WAN (Wide Area Network), a wireless network such as a wireless WAN (WWAN, Wireless Wide Area Network) via a base station and a wireless MAN (WMAN, Wireless Metropolitan Area Network), and the Internet using a communication protocol such as TCP/IP (Transmission Control Protocol/Internet Protocol).

### [1] Flow of providing a service related to benefit associated with services in the information processing system 1000

In the information processing system 1000, the information processing terminal 200 owned by the user is caused to record distribution data based on later-described distribution information element. Then, when the user receives a service such as purchasing an item, the information processing system 1000 can use distribution data corresponding to the service, so as to provide a service related to benefit associated with service such as purchasing of an item (which may be hereinafter referred to as "benefit service") to the user of the information processing terminal 200.

More specifically, the information processing system 1000 goes through, for example, the following stages (A) to (C), so as to provide benefit service associated with service to the user of the information processing terminal 200. In the embodiment of the present invention, a benefit provided in association with service is, for example, a discount which is applied when the user purchases an item (when the user receives a purchase service). However, the benefit provided in association with service according to the embodiment of the present invention is not limited thereto.

### (A) Stage for installing announcement information element

Announcement information element based on distribution information element stored in the management server 100 is stored to the announcement information element providing source 700.

Herein, examples of the announcement information element providing source 700 include the announcement information providing server 700A, a broadcast station 700B, a two-dimensional code 700C, and the like. The announcement information providing server 700A stores the announcement information element, and provides the announcement information element to the information processing terminal 200 via the network 800. The broadcast station 700B provides the announcement information element to the information processing terminal 200 by means of a broadcast wave transmitted from an antenna or a television tower (not shown). The two-dimensional code 700C stores the announcement information element as the two-dimensional code, and the information processing terminal 200 reads the two-dimensional code, so that the announcement information element is provided to the information processing terminal 200. It should be noted that the announcement information element providing source 700 according to the embodiment of the present invention is not limited to the announcement information providing server 700A, the broadcast station 700B, and the two-dimensional code 700C.

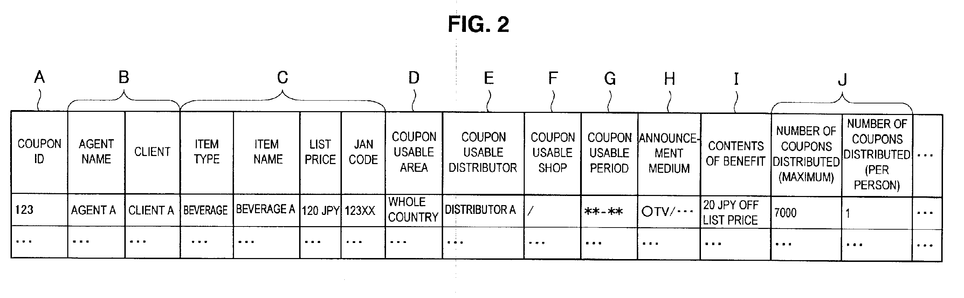

The distribution information element according to the embodiment of the present invention means information in which information related to benefit provided in association with service is recorded. FIG. 2 is an explanatory diagram illustrating an example of distribution information element stored in the management server 100 according to the embodiment of the present invention. Each row shown in FIG. 2 corresponds to respective distribution information element.

As shown in FIG. 2, the distribution information element includes, for example, information for identifying the distribution information element (A of FIG. 2), information about a source providing benefit service (B of FIG. 2), information about an item offering benefit (C of FIG. 2), information about a region in which benefit can be provided (D of FIG. 2), information about a service-providing source capable of providing benefit (E of FIG. 2), information about a service-providing location in which benefit can be provided (F of FIG. 2), information about a period in which benefit can be provided (G of FIG. 2), information about medium that announced the benefit (H of FIG. 2), information indicating the contents of the benefit (I of FIG. 2), information about limitation on use of the benefit (J of FIG. 2), and the like.

In the embodiment of the present invention, the information about a region in which benefit can be provided corresponds to, for example, information about a usable region in which the user can use benefit service. In the embodiment of the present invention, the service-providing source capable of providing benefit indicated by the information about the service-providing source includes, for example, a distributor (or a distributor company) capable of providing benefit using the distribution information element as shown by E of FIG. 2. However, in the embodiment of the present invention, the service-providing source capable of providing benefit indicated by the information about the service-providing source is not limited thereto. In the embodiment of the present invention, the service-providing source capable of providing benefit includes, for example, various companies and the like capable of providing benefit associated with service, such as an eating and drinking establishment (or an eating and drinking company). In the embodiment of the present invention, the service-providing location in which benefit can be provided indicated by the information about the service-providing location includes, for example, a store capable of providing benefit using the distribution information element (for example, O branch office) as shown by F of FIG. 2. However, in the embodiment of the present invention, the service-providing location in which benefit can be provided indicated by the information about the service-providing location is not limited thereto. In the embodiment of the present invention, the information about the service-providing location corresponds to, for example, information about a usable location in which the user can receive benefit service. In the embodiment of the present invention, the information about a period in which benefit can be provided corresponds to, for example, information about a usable period in which the user can receive benefit service.

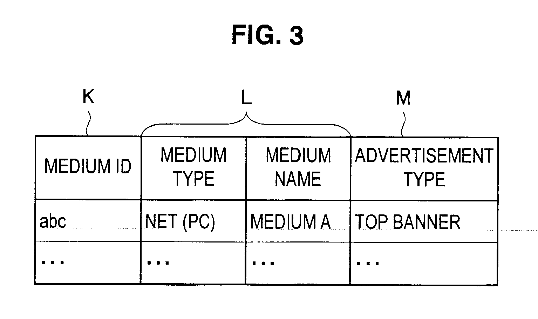

In the embodiment of the present invention, the distribution information element is not limited to the example shown in FIG. 2. For example, the distribution information element according to the embodiment of the present invention may not include all of the various kinds of information as shown in FIG. 2. In addition, the distribution information element according to the embodiment of the present invention may further include, for example, announcement source information about a source of announcement, which is information about a medium used to announce the benefit as shown by H of FIG. 2. FIG. 3 is an explanatory diagram illustrating an example of announcement source information according to the embodiment of the present invention. As shown in FIG. 3, the announcement source information can include, for example, information for identifying an announcement source (K of FIG. 3), information for explaining the announcement source (L of FIG. 3), and information indicating a mode in which the announcement information element is provided (M of FIG. 3). In the following explanation, the management server 100 is assumed to store the announcement source information as shown in FIG. 3 in addition to the distribution information element as shown in FIG. 2.

FIG. 2 shows the example in which the benefit provided in association with service indicated by the distribution information element is provided as a coupon to the user. However, it is to be understood that the embodiment of the present invention is not limited to the example in which the benefit is provided as the coupon to the user. In the following explanation, for example, the benefit provided in association with service indicated by the distribution information element is assumed to be provided as a coupon to the user.

Further, the announcement information element according to the embodiment of the present invention is information based on the distribution information element stored in the management server 100, and is information recording information used by the information processing terminal 200 to communicate with the distribution server 500. In addition, the announcement information element according to the embodiment of the present invention includes information for identifying the announcement source. Since the announcement information element includes the information for identifying the announcement source, it is possible to specify from which announcement information element providing source 700 the user of the information processing terminal 200 desires to record distribution data, based on, for example, a log recorded in the distribution server 500.

Herein, the announcement information element may be, for example, information representing the distribution server 500 such as an IP (Internet Protocol) address and a domain name indicating the distribution server 500, attached with parameters, i.e., a coupon identifier (ID) (A of FIG. 2) and a medium identifier (ID) identifying the announcement source (K of FIG. 3). However, the announcement information element according to the embodiment of the present invention is not limited thereto. For example, the announcement information element may be "http://(domain name)/?media=(medium ID)?coupon=(coupon ID)".

The management server 100 generates announcement information element based on, for example, an announcement information element acquisition request transmitted from the announcement information element providing server 700A and the broadcast station 700B (for example, received via the network 800) and based on the stored distribution information element and the stored announcement source information. Herein, the management server 100 generates the announcement information element in response to the announcement information element acquisition request, based on, for example, identification information element representing the transmission source (for example, medium ID) and information for identifying the distribution information element (for example, coupon ID) included in the announcement information element acquisition request. However, the generation of announcement information element is not limited thereto. Then, the management server 100 transmits the generated announcement information element to the transmission source that transmitted the announcement information element acquisition request.

In addition, the management server 100 issues a two-dimensional code based on the announcement information element generated based on the stored distribution information element and the stored announcement source information. Alternatively, the management server 100 causes an apparatus to issue a two-dimensional code upon transmitting announcement information element to the apparatus issuing the two-dimensional code.

In the information processing system 1000, for example, as described above, the announcement information element based on the distribution information element stored in the management server 100 is set to the announcement information element providing source 700.

### (B) Stage for recording distribution data to information processing terminal 200

In the information processing system 1000, the information processing terminal 200 obtains announcement information element from the announcement information element providing source 700, so as to record distribution data to the information processing terminal 200.

In the embodiment of the present invention, the distribution data means data used in order to receive benefit service. Moreover, the information processing terminal 200 obtains the announcement information element (information based on the distribution information element) from the announcement information element providing source 700, so that the distribution data is recorded to the information processing terminal 200. The distribution data is considered to be data based on the distribution information element stored in the management server 100. Since the distribution data is recorded to the information processing terminal 200, the user can receive benefit service, such as receiving discount when purchasing an item, by using the information processing terminal 200.

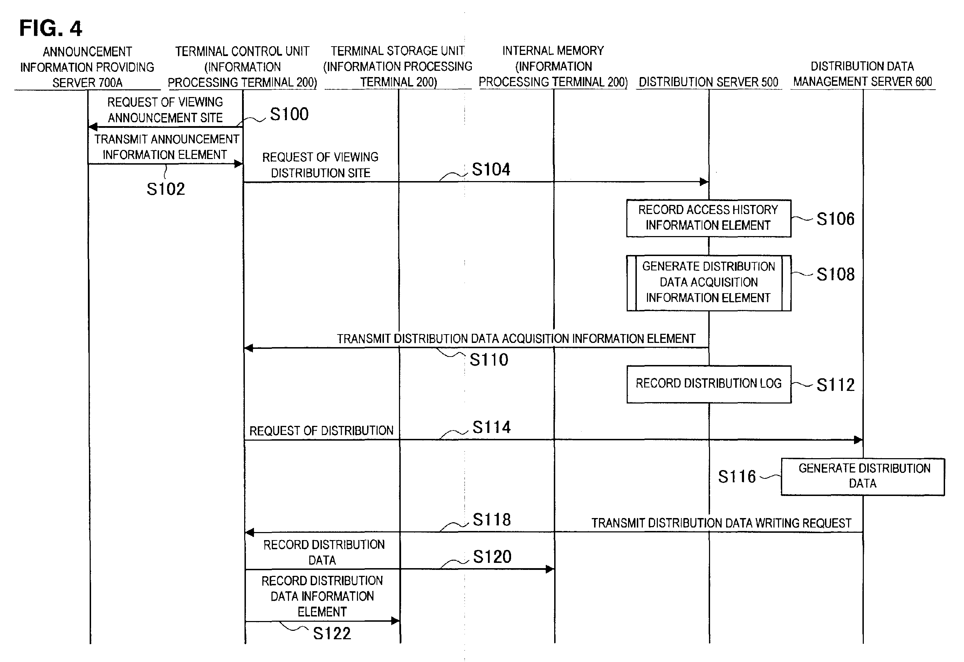

FIG. 4 is an explanatory diagram illustrating an example of processing related to recording of distribution data to the information processing terminal 200 in the information processing system 1000 according to the embodiment of the present invention.

FIG. 4 shows typical constituent elements of the information processing terminal 200, namely, a terminal control unit, a terminal storage unit serving as storing means, and an internal memory arranged in an IC chip for performing processing related to communication using a carrier wave of a predetermined frequency such as 13.56 MHz (wireless communication). The terminal control unit controls the entire information processing terminal 200, and plays the role of, for example, performing various kinds of processing by executing various kinds of applications. The internal memory is, for example, tamper-resistant. Reading and writing operation of information (data) to and from the internal memory is performed based on a particular instruction transmitted from an external device via a carrier wave of a predetermined frequency or a command given by the terminal control unit.

The terminal control unit of the information processing terminal 200 (which may be hereinafter simply referred to as "terminal control unit") transmits an announcement site viewing request to the announcement information providing server 700A (S100). In the embodiment of the present invention, the transmission performed by the terminal control unit is a transmission of communication means of the information processing terminal 200 (communication means for communicating via another communication path that is different from the communication path using the carrier wave of the predetermined frequency) performed by the terminal control unit (This is applicable throughout this specification.).

The announcement information providing server 700A receives an announcement site viewing request transmitted from the terminal control unit in step S100, and transmits announcement information element to the information processing terminal 200 in reply to the announcement site viewing request (S102). The transmission of the announcement information element in step S102 is achieved by, for example, transmitting information for causing display means of the information processing terminal to display an announcement site included in the announcement information element. However, the transmission of the announcement information element in step S102 is not limited thereto.

The terminal control unit receives the announcement information element transmitted from the announcement information providing server 700A in step S102, and transmits a distribution site viewing request to the distribution server 500 based on the announcement information element (S104). In the embodiment of the present invention, the reception of information performed by the terminal control unit means that the terminal control unit receives the information received by the communication means of the information processing terminal 200 (communication means for communicating via another communication path that is different from the communication path using the carrier wave of the predetermined frequency) (This is applicable throughout this specification.).

The terminal control unit selectively transmits a distribution site viewing request based on, for example, operation performed by the user using operation means of the information processing terminal 200 such as operation keys and buttons. However, the method of the terminal control unit for transmitting a distribution site viewing request is not limited thereto. An example of selective transmission based on operation of the user is that the user selects announcement information element (for example, selects a banner) from a list of announcement sites displayed on the display means.

The terminal control unit transmits a distribution site viewing request including, for example, distribution information element, terminal identification information element representing the information processing terminal 200, and referrer information. However, the distribution site viewing request according to the embodiment of the present invention is not limited thereto.

The distribution server 500 receives the distribution site viewing request transmitted from the terminal control unit in step S104, and records access history information element based on the received distribution site viewing request (S106).

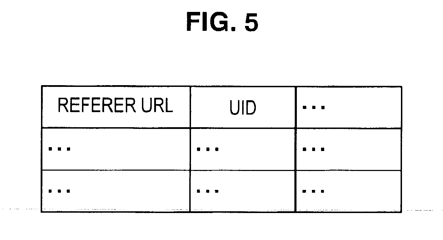

FIG. 5 is an explanatory diagram illustrating an example of access history information element recorded by the distribution server 500 according to the embodiment of the present invention. The distribution server 500 records referrer information included in the distribution site viewing request as "referrer URL" shown in FIG. 5. In addition, the distribution server 500 records the terminal identification information element included in the distribution site viewing request as "UID" shown in FIG. 5.

The processing for recording distribution data to the information processing terminal 200 in the information processing system 1000 will be described with reference to FIG. 4 again. The distribution server 500 generates distribution data acquisition information element based on the distribution site viewing request (S108; distribution data acquisition information element generation processing).

In the embodiment of the present invention, the distribution data acquisition information element is information used to record distribution data to the information processing terminal 200. The distribution data acquisition information element may be, for example, information representing the distribution data management server 600 such as a domain name, attached with parameters, i.e., a coupon ID, a medium ID, and the terminal identification information element representing the information processing terminal 200 (or the second terminal identification information element obtained by converting the terminal identification information element). However, the distribution data acquisition information element according to the embodiment of the present invention is not limited thereto. An example of distribution data acquisition information element is "https://(domain name)/?xxx=(medium ID)-(coupon ID)-terminal identification information element (or the second terminal identification information element)". However, the distribution data acquisition information element is not limited thereto. For example, the distribution data acquisition information element may further include setting information for causing the distribution data management server 600 to execute desired processing.

### [Example of distribution data acquisition information element generation processing]

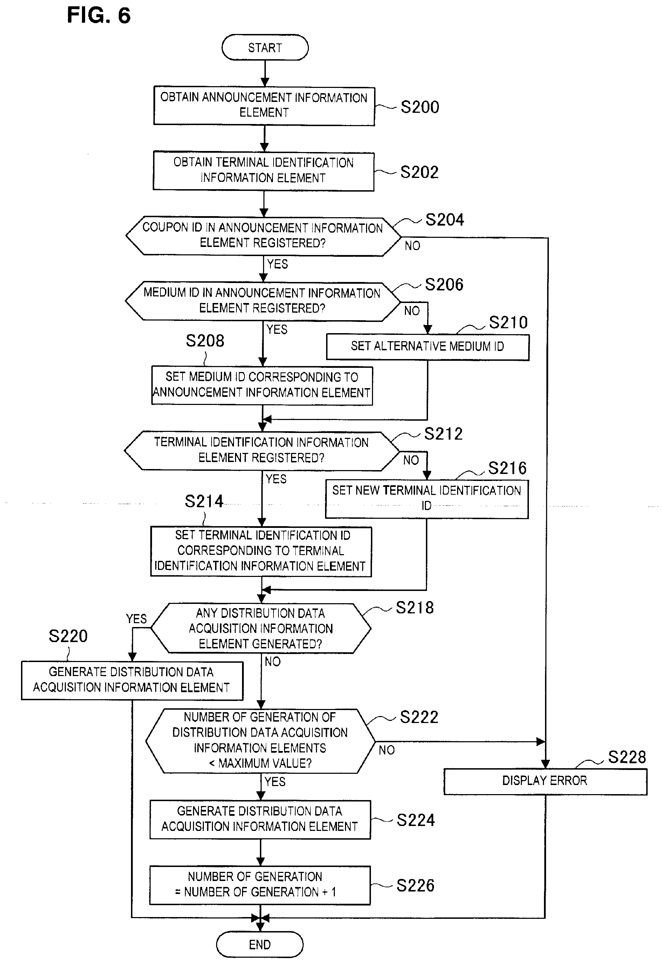

FIG. 6 is a flow diagram illustrating an example of distribution data acquisition information element generation processing in the distribution server 500 according to the embodiment of the present invention.

The distribution server 500 obtains announcement information element from the received distribution site viewing request (S200), and obtains the terminal identification information element from the distribution site viewing request (S202).

The distribution server 500 determines whether the coupon ID included in the announcement information element is registered or not (S204). Herein, the distribution server 500 performs the determination processing of step S204 based on, for example, the distribution information database recording the coupon ID stored in the storing means such as a hard disk and the coupon ID included in the announcement information element.

Herein, the distribution server 500 communicates with the management server 100 via the network 800, so as to obtain information about a coupon ID corresponding to the distribution information element stored in the management server 100 at a regular interval or irregular interval and record the obtained coupon ID to the distribution information database. In other words, the distribution information database of the distribution server 500 stores a coupon ID corresponding to the distribution information element stored in the management server 100. Therefore, when the distribution server 500 determines in step S204 that the coupon ID included in the announcement information element is not registered, the announcement information element included in the distribution site viewing request transmitted from the information processing terminal 200 is considered to include wrong information.

When the coupon ID included in the announcement information element is not determined to be registered in step S204, the distribution server 500 causes the information processing terminal 200 to display, for example, an error message to the effect that "there is no applicable coupon" (S230).

When the coupon ID included in the announcement information element is determined to be registered in step S204, the distribution server 500 determines whether the medium ID included in the announcement information element is registered or not (S206). Herein, the distribution server 500 performs the determination processing of step S206 based on, for example, the announcement source information database registering the medium ID stored in the storing means and the medium ID included in the announcement information element. Herein, the distribution server 500 communicates with the management server 100 via the network 800, so as to obtain information about a medium ID corresponding to the announcement source information stored in the management server 100 at a regular interval or irregular interval and record the obtained medium ID to the announcement source information database.

When the medium ID included in the announcement information element is not determined to be registered in step S206, the distribution server 500 sets an alternative medium ID as the medium ID to be set to the distribution data acquisition information element (S210). Herein, an example of alternative medium ID set in the distribution server 500 in step S210 includes a medium ID that is defined in advance. However, the alternative medium ID according to the embodiment of the present invention is not limited thereto.

The medium ID plays the role of, for example, log information indicating from which announcement information element providing source the announcement information element based on which the information processing terminal 200 transmitted the distribution site viewing request is obtained. Therefore, unlike the coupon ID directly related to providing of benefit service when the coupon ID included in the announcement information element is wrong, the medium ID is not information directly related to providing of benefit service. Therefore, in the information processing system 1000 according to the embodiment of the present invention, when the distribution server 500 determines in step S206 that the medium ID included in the announcement information element is not registered, the distribution server 500 sets an alternative medium ID without displaying any error, and proceeds processing. When the medium ID is determined not to be registered in step S206, it is to be understood that the distribution server 500 can cause the information processing terminal 200 to display an error in the same manner as the case where the coupon ID is determined not to be registered in step S204.

When the medium ID included in the announcement information element is determined to be registered in step S206, the distribution server 500 sets the medium ID included in the announcement information element as a medium ID that is to be set to the distribution data acquisition information element (S208).

When the medium ID is set in step S208 or step S210, the distribution server 500 determines whether the terminal identification information element is registered or not (S212). It should be noted that when the distribution server 500 does not convert the terminal identification information element included in the announcement information element into the second terminal identification information element, the distribution server 500 does not perform the processing of step S212 and the processing of steps S214 and S216, which are described later. In the above case, the distribution server 500 sets the terminal identification information element included in the announcement information element to the distribution data acquisition information element.

Herein, the distribution server 500 performs the determination processing of step S212 based on, for example, a terminal identification information element database, stored in the storing means, in which terminal identification information element and an terminal identifier (ID) (an example of the above second terminal identification information element) are associated and the terminal identification information element included in the announcement information element. In addition, the distribution server 500 transmits information recorded in the terminal identification information database to the management server 100 at a regular interval or irregular interval. As described above, the management server 100 can uniquely specify the terminal identification information element based on the second terminal identification information element converted by the distribution server 500.

When the terminal identification information element is determined to be registered in step S212, the distribution server 500 sets the terminal ID corresponding to the terminal identification information element as a terminal ID to be set to the distribution data acquisition information element (S214).

When the terminal identification information element is not determined to be registered in step S212, the distribution server 500 generates a new terminal ID, and sets the generated terminal ID as a terminal ID to be set to the distribution data acquisition information element (S216). When the distribution server 500 finishes the processing of step S216, or while the distribution server 500 performs the processing of step S216, the distribution server 500 associates the generated terminal ID and the terminal identification information element, which are recorded to the terminal identification information database.

When the terminal ID is set in step S214 or step S216, the distribution server 500 determines whether the distribution server 500 has ever generated distribution data acquisition information f element or the information processing terminal corresponding to the terminal identification information element (S218).

Herein, the distribution server 500 performs the determination processing of step S212 based on, for example, a distribution data acquisition information database in which terminal identification information element and information indicating whether distribution data acquisition information element is generated or not (for example, flag) are associated for each type of distribution data acquisition information element and the terminal identification information element included in the announcement information element. For example, the distribution server 500 stores the distribution data acquisition information database to the storing means. However, the embodiment of the present invention is not limited thereto.

When distribution data acquisition information element for the information processing terminal corresponding to the terminal identification information element is determined to have been generated in step S218, the distribution server 500 generates the distribution data acquisition information element (S220).

When distribution data acquisition information element for the information processing terminal corresponding to the terminal identification information element is not determined to have been generated in step S218, the distribution server 500 determines whether a condition, "number of generation of distribution data acquisition information elements < maximum value", is satisfied or not (S222). Herein, the distribution server 500 updates the value of the counter representing the number of generation of distribution data acquisition information elements every time distribution data acquisition information element is generated for a new information processing terminal (step S226, later described), so as to recognize the number of generation of distribution data acquisition information elements. However, the method for recognizing the number of generation of distribution data acquisition information elements in the distribution server 500 is not limited thereto.

When the condition is not determined to be satisfied in step S222, the distribution server 500 causes the information processing terminal 200 to display, for example, an error message to the effect that "the coupon in question is no longer distributed" (S230).

When the condition is determined to be satisfied in step S222, the distribution server 500 generates distribution data acquisition information element (S224), and increases the number of generation of distribution data acquisition information elements by one (S226).

For example, the distribution server 500 generates the distribution data acquisition information element by performing the processing shown in FIG. 6. It is to be understood that distribution data acquisition information element generation processing performed by the distribution server 500 according to the embodiment of the present invention is not limited to the example shown in FIG. 6.

The processing related to recording of the distribution data to the information processing terminal 200 in the information processing system 1000 will be described with reference to FIG. 4 again. The distribution server 500 transmits the distribution data acquisition information element generated in the processing of step S108 to the information processing terminal 200 (S110).

In step S110, when the distribution data acquisition information element is transmitted to the information processing terminal 200, the distribution server 500 records distribution log (S112).

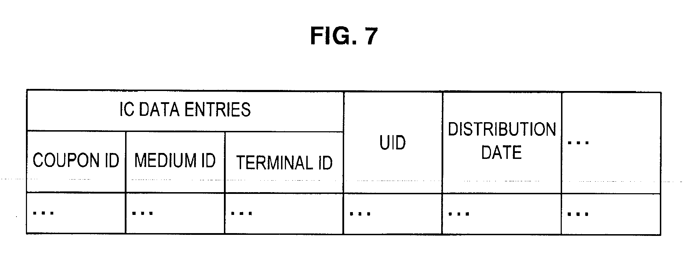

FIG. 7 is an explanatory diagram illustrating an example of distribution log recorded by the distribution server 500 according to the embodiment of the present invention. The distribution server 500 records a distribution log including information such as various kinds of identifiers (IDs) (various kinds of IDs in IC data recording items as shown in FIG. 7) set in the distribution data acquisition information element generation processing as shown in FIG. 6, terminal identification information element (UID as shown in FIG. 7), and a date of distribution (distribution date of FIG. 7). It is to be understood that the distribution log recorded by the distribution server 500 according to the embodiment of the present invention is not limited to the example shown in FIG. 7.

The processing related to recording of the distribution data to the information processing terminal 200 in the information processing system 1000 will be described with reference to FIG. 4 again. The terminal control unit receives the distribution data acquisition information element transmitted from the distribution server 500 in step S110, and transmits, based on the distribution data acquisition information element, a distribution request for requesting distribution of the distribution data to the distribution data management server 600 (S114). Herein the terminal control unit selectively transmits the distribution request based on, for example, operation performed by the user using operation means of the information processing terminal 200. However, the method for transmitting the distribution request performed by the terminal control unit according to the embodiment of the present invention is not limited thereto.

The distribution data management server 600 receives the distribution request transmitted from the terminal control unit in step S114, and generates distribution data based on the distribution request (S116). For example, the distribution data management server 600 generates the distribution data based on the coupon identifier (ID), the medium identifier (ID), the terminal identifier (ID), and the like included in the distribution request.

When the distribution data is generated in step S600, the distribution data management server 600 transmits a distribution data writing request to the information processing terminal 200 (S118). Herein, the distribution data writing request includes, for example, the generated distribution data, a write instruction for writing the distribution data to the internal memory of the information processing terminal 200, and distribution data information element representing an overview of distribution data. However, the distribution data writing request according to the embodiment of the present invention is not limited thereto.

Although not shown in FIG. 4, the distribution data management server 600 can record the distribution log after transmitting the distribution data writing request to the information processing terminal 200 in step S118. Examples of information recorded to the distribution log by the distribution data management server 600 include a distribution identifier (ID) identifying a distribution, information element for identifying an electronic communications company (carrier) related to communication of the information processing terminal 200, information about processing start time, information about processing end time, and the like. However, the information recorded to the distribution log by the distribution data management server 600 is not limited thereto.

The terminal control unit receives the distribution data writing request transmitted from the distribution data management server 600 in step S118, and records the distribution data to the internal memory based on the write instruction included in the distribution data writing request (S120). Further, the terminal control unit records the distribution data information element included in the distribution data writing request to the terminal storage unit (S122). Examples of the distribution data recorded to the internal memory in the processing of FIG. 120 include information such as the coupon ID, the terminal ID, and the number of times of allowed use. However, the distribution data recorded to the internal memory in the processing of step S120 is not limited thereto.

In the information processing system 1000, each apparatus performs, for example, the processing as shown in FIG. 4, so as to record the distribution data to the information processing terminal 200. Therefore, the information processing terminal 200 goes into a state ready for receiving benefit service such as receiving discount when purchasing an item.

In the information processing system 1000 according to the embodiment of the present invention, the processing related to recoding of the distribution data is not limited to the processing shown in FIG. 4. For example, although cooperated processing performed by the distribution server 500 and the distribution data management server 600 is not shown in the example of FIG. 4, the distribution server 500 and the distribution data management server 600 may cooperate with each other to perform the processing. The above cooperated processing may be, for example, transmitting a distribution data acquisition request generated by the distribution server 500 to the distribution data management server 600, so as to cause the distribution data management server 600 to transmit a distribution data acquisition request (or a request generated by changing a distribution data acquisition request) to the information processing terminal 200. However, the above cooperated processing is not limited thereto.

### (C) Stage for providing of benefit service

As a result of going through the above stage (B), the distribution data for receiving benefit service is recorded to the information processing terminal 200. Subsequently, the processing related to providing of benefit service using the distribution data recorded in the information processing terminal 200 will be described, which is held at a service-providing location for providing purchase service such as a convenience store.

### (C-1) First example of processing related to providing of benefit service

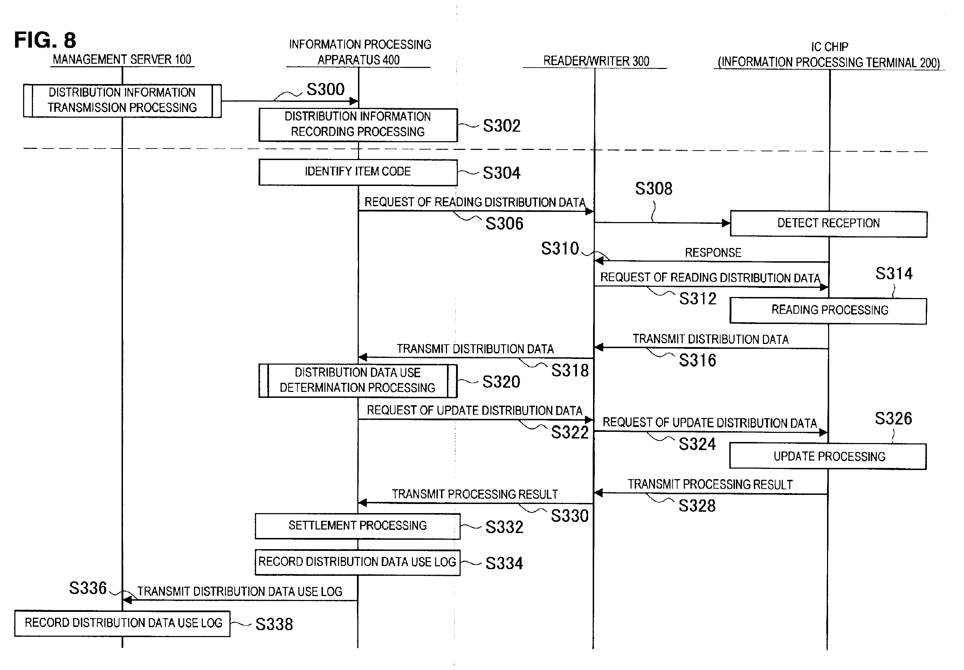

FIG. 8 is an explanatory diagram showing the first example of processing related to providing of benefit service in the information processing system 1000 according to the embodiment of the present invention. FIG. 8 explains an example of benefit service using distribution data. More specifically, in this example, the information processing apparatus 400 uses the distribution data for settlement processing so as to apply discount when an item is purchased.

FIG. 8 shows a typical constituent element of the information processing terminal 200, namely, an IC chip for performing processing related to communication using a carrier wave of a predetermined frequency such as 13.56 MHz. In the IC chip of the information processing terminal 200, an internal memory is arranged as shown in FIG. 4. In the following explanation, the IC chip arranged in the information processing terminal 200 (which may be hereinafter simply referred to as "IC chip") is assumed to store, for example, distribution data as a result of the processing of FIG. 4. It is to be understood that the information processing terminal 200 according to the embodiment of the present invention is not limited to the configuration where the internal memory capable of storing the distribution data is arranged as the IC chip.

In the processing of step S300 to step S338 shown in FIG. 8, the processing of step S300 and S302 correspond to the pre-processing performed before providing of benefit service, and the processing of steps S304 to S338 correspond to the processing related to providing of benefit service.

The management server 100 performs distribution information element transmission processing, and selectively transmits distribution information element to the information processing apparatus 400 (S300). The reason why the management server 100 transmits distribution information element to the information processing apparatus 400 herein is that when distribution information element corresponding to distribution data stared in the information processing terminal 200 is not stored in the information processing apparatus 400, the information processing apparatus 400 may not normally perform settlement processing using the distribution data. The processing of the information processing apparatus 400 related to determination as to whether the distribution data is used or not will be described in the following explanation about step S320.

### [One example of distribution information element transmission processing of management server 100]

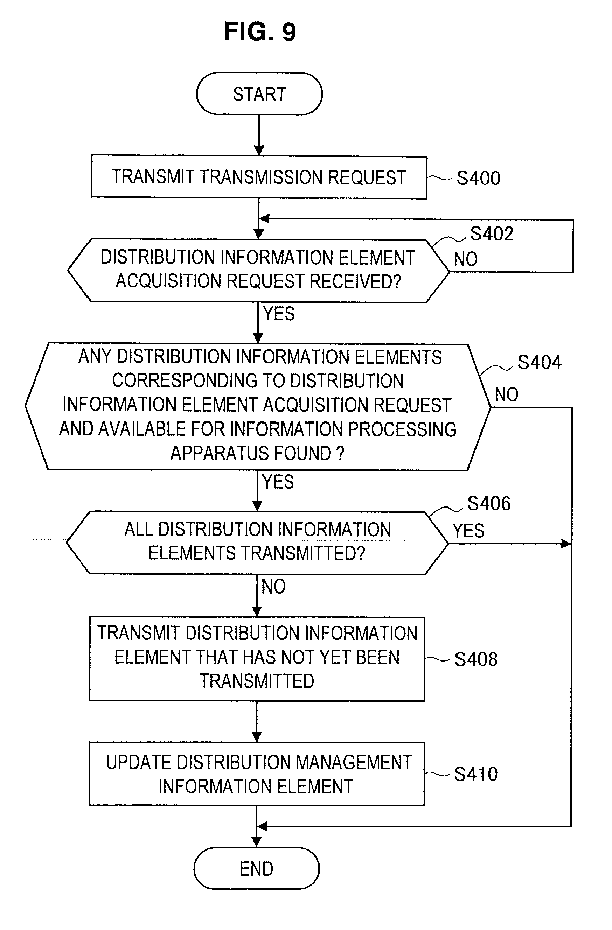

FIG. 9 is a flow diagram illustrating an example of distribution information element transmission processing in the management server 100 according to the embodiment of the present invention. The management server 100 performs the processing shown in FIG. 9 for each information processing apparatus constituting the information processing system 1000. In the following explanation, an example of distribution information element transmission processing will be described using an example where the management server 100 performs the processing on the information processing apparatus 400. The description about the processing performed on another information processing apparatus constituting the information processing system 1000 is omitted, because it is the same as the processing performed on the information processing apparatus 400.

The management server 100 transmits to the information processing apparatus 400 a transmission request for requesting transmission of a distribution information element acquisition request (S400).

Herein, the distribution information element acquisition request according to the embodiment of the present invention is information (data) for requesting acquisition of distribution information element transmitted from the information processing apparatus. The distribution information element acquisition request includes not only apparatus identification information element representing the information processing apparatus having transmitted the distribution information element acquisition request but also at least one or more information element of, for example, a region in which service is provided, a service-providing source, and a service-providing location. However, the distribution information element acquisition according to the embodiment of the present invention request is not limited thereto.

The apparatus identification information element (identification information element) according to the embodiment of the present invention is information for uniquely identifying an information processing apparatus constituting the information processing system 1000. Examples of the apparatus identification information element include an identifier (ID) unique to information processing apparatus, a MAC address (Media Access Control address) of a communication device of the information processing apparatus 400, and the like.

The management server 100 uses an information processing apparatus database storing various kinds of information about information processing apparatuses constituting the information processing system 1000, and transmits a transmission request to each of the information processing apparatuses constituting the information processing system 1000 at a regular interval or when, for example, distribution information element is newly stored. Examples of information about the information processing apparatuses recorded in the information processing apparatus database include apparatus identification information element, information about a region in which service is provided, information about a service-providing source to which the information processing apparatus belongs, information about a service-providing location, information related to communication such as an IP address of the information processing apparatus, and the like. However, the information about the information processing apparatuses according to the embodiment of the present invention is not limited thereto.

In addition, the management server 100 selects, for each distribution information element, an information processing apparatus to which a transmission request is transmitted, and transmits a transmission request to an information processing apparatus selected for each distribution information element. Examples of selective transmission of transmission request in the management server 100 include transmission to a region in which benefit service related to distribution information element is provided, a service-providing source capable of providing benefit service, and an information processing apparatus satisfying the condition of a service-providing location in which benefit service can be provided. The management server 100 performs the above selective transmission based on, for example, information about a region in which service included in distribution information element is provided (D of FIG. 2), information about a service-providing source (E of FIG. 2), information about a service-providing location (F of FIG. 2), and the like, and based on information recorded in the above information processing apparatus database. However, the above selective transmission method of the management server 100 is not limited thereto. It is to be understood that the management server 100 according to the embodiment of the present invention is not limited to the above processing where a transmission request is selected and transmitted for each distribution information element.

When a transmission request is transmitted in step S400, the management server 100 determines whether a distribution information element acquisition request according to the transmission request has been received or not (S402).

When the distribution information element acquisition request is not determined to be received in step S402, the management server 100 does not proceed the processing until the distribution information element acquisition request is received. When the distribution information element acquisition request is not determined to be received until a predetermined period of time passes since the transmission request is transmitted, the management server 100 can terminate the processing (a so-called timeout).

When the distribution information element acquisition request is determined to be received in step S402, the management server 100 determines whether there is any distribution information element that can be used by the information processing apparatus 400 corresponding to the distribution information element acquisition request (S404).

Herein, the management server 100 performs the processing of step S404 based on, for example, a distribution information database storing each of distribution information element as shown in FIG. 2 (which may be hereinafter referred to as "distribution information DB") and based on the distribution information element acquisition request.

More specifically, the management server 100 specifies a region to which the information processing apparatus 400 belongs and in which service is provided, a service-providing source, and a service-providing location (specifies conditions), based on, for example, information about at least one or more regions which are included in the distribution information element acquisition request and in which service is provided, a, service-providing source, and a service-providing location. The management server 100 performs the processing of step S404 by determining whether distribution information element in conformity with the specified condition exists in the distribution information database. It should be noted that the processing method of step S404 in the management server100 according to the embodiment of the present invention is not limited thereto. Alternatively, for example, the management server 100 can perform the processing of step S404 by determining whether distribution information element satisfying the condition about period exists in the distribution information database, based on information about a time at which the distribution information element acquisition request is received. Still alternatively, the management server 100 can perform the processing of step S404 by determining whether distribution information element satisfying the condition of period and the above-specified conditions exists in the distribution information database.

When an available distribution information element is not determined to exist in step S404, the management server 100 terminates the processing.

When an available distribution information element is determined to exist in step S404, the management server 100 determines whether all the stored distribution information element is transmitted to the information processing apparatus 400 (S406).

Herein, the management server 100 performs the determination of step S406 based on, for example, distribution management information element for managing information about a transmission state of each distribution information element transmitted to each information processing apparatus constituting the information processing system 1000. The distribution management information element according to the embodiment of the present invention includes, for example, information (for example, flag) about a transmission state of each distribution information element transmitted to each information processing apparatus. However, information included in the distribution management information element according to the embodiment of the present invention is not limited thereto.

When all the distribution information elements is determined to be transmitted to the information processing apparatus 400 in step S406, the management server 100 terminates the processing.

When all the distribution information elements is not determined to be transmitted to the information processing apparatus 400 in step S406, the management server 100 transmits the distribution information element, which has not been transmitted, to the information processing apparatus 400 (S408). For example, the management server 100 adopts, as distribution information element to be transmitted to the information processing apparatus, a portion of information constituting the distribution information element as shown in FIG. 2 or the portion of information and the medium ID as shown in FIG. 3 (the medium ID corresponding to the distribution information element). However, the adopted distribution information element is not limited thereto. Examples of the distribution information element transmitted to the information processing apparatus include information including information A to C, G, I of FIG. 2 and information K of FIG. 3.

When the distribution information element is transmitted in step S408, the management server 100 updates the distribution management information element corresponding to the sent distribution information element to "sent" state (the distribution information element has been transmitted) (S410). The method for updating the above distribution management information element in the management server 100 may include, for example, changing the value of a flag representing the transmission state of the distribution information element to the information processing apparatus. However, the method is not limited thereto.

The management server 100 selectively transmits the distribution information element to the information processing apparatus by performing, for example, the processing as shown in FIG. 9. It is to be understood that the distribution information element transmission processing in the management server 100 according to the embodiment of the present invention is not limited to the example shown in FIG. 9.

The first example of processing related to providing of benefit service in the information processing system 1000 will be subsequently described with reference to FIG. 8 again. The information processing apparatus 400 receives the distribution information element transmitted from the management server 100 in step S300, and records the received distribution information element (S302).

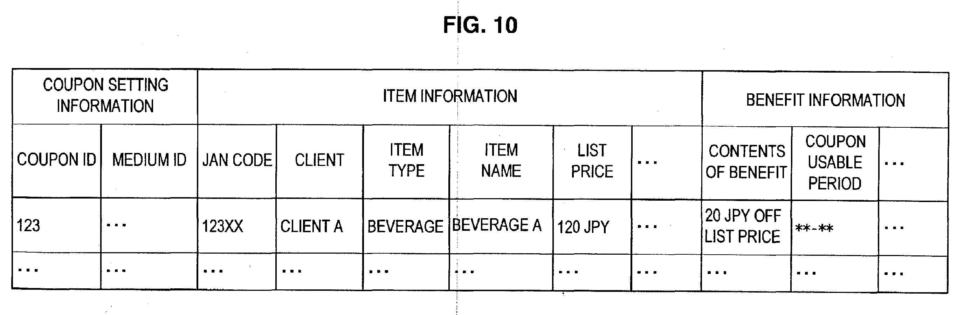

Each of FIG. 10 to FIG. 12 is an explanatory diagram illustrating an example of a recording method of distribution information element in the information processing apparatus 400 according to the embodiment of the present invention.

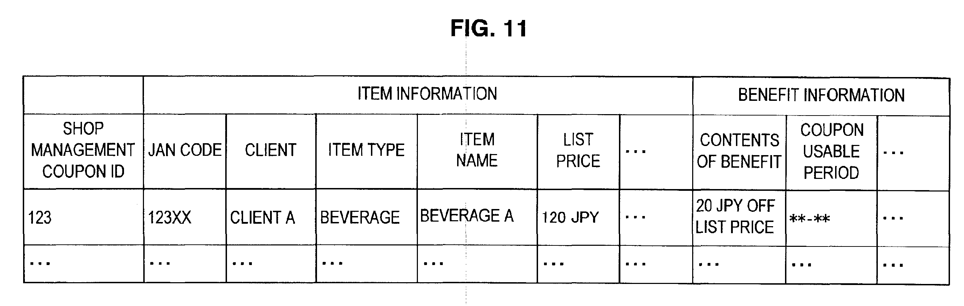

FIG. 10 shows an example of the first recording method of distribution information element in the information processing apparatus 400, and shows a case where distribution information element received as one database (or file) is managed. Each of FIG. 11 and

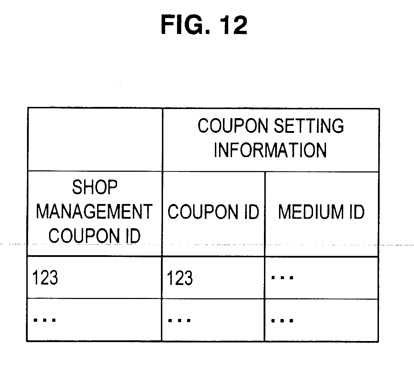

FIG. 12 shows an example of the second recording method of distribution information element in the information processing apparatus 400, and shows a case where distribution information element received as two databases (or files) is managed.

For example, when a database unique to the information processing apparatus is stored in order to provide benefit service as shown in FIG. 11, the information processing apparatus according to the embodiment of the present invention records the received distribution information element according to the second recording method. In other cases, the information processing apparatus records the received distribution information element according to the first recording method. However, it is to be understood that the method for recording the received distribution information element in the information processing apparatus according to the embodiment of the present invention is not limited thereto.

The first example of processing related to providing of benefit service in the information processing system 1000 will be described with reference to FIG. 8 again. The information processing apparatus 400 identifies an item code of an item which the user of the information processing terminal 200 desires to purchase (S304). For example, the information processing apparatus 400 performs the processing of step S340 by obtaining an item code read by an item code reading apparatus such as a barcode reader (the information processing apparatus 400 may have the function of the item code reading apparatus.). An example of item code according to the embodiment of the present invention includes JAN (Japanese Article Number) code. However, the item code according to the embodiment of the present invention is not limited thereto.

When the information processing apparatus 400 identifies an item code in step S304, the information processing apparatus 400 transmits to the reader/writer 300 a distribution data reading request for causing the reader/writer 300 to read distribution data from the information processing terminal 200 (S306).

When the item code is identified in step S304, for example, the information processing apparatus 400 conveys, to the user of the information processing terminal 200, a message prompting the user to scan the information processing terminal 200 over the reader/writer 300 when the user receives benefit service. Scanning the information processing terminal 200 over the reader/writer 300 includes, for example, moving the information processing terminal 200 to a position within a predefined distance from the reader/writer 300 (within a distance in which communication can be made using a carrier wave of a predetermined frequency).

An IC chip of the information processing terminal 200 (hereinafter simply referred to as "IC chip" in FIG. 8) detects reception of a carrier wave transmitted from the reader/writer 300 at a regular/irregular interval or continuously (S308). For example, the IC chip can perform the processing of step S308 by causing a carrier detection unit (described later) of the IC chip to transmit, to a data processing unit (described later), a detection signal based on an induced voltage generated by electromagnetic induction at a communication antenna (described later).

When reception of a carrier wave is detected in step S308, the IC chip replies that the carrier wave is received (S310). Herein, the IC chip causes a load modulation unit (described later) of the IC chip to carry out load modulation, so as to perform the processing of step S310.

The reader/writer 300 receives a response transmitted from the IC chip in step S310, and transmits, to the IC chip, a distribution data reading request for transmitting distribution data to the IC chip (S312). Herein, the distribution data reading request transmitted in step S312 may be the same data as the distribution data reading request transmitted from the information processing apparatus 400 in step S306. However, the distribution data reading request transmitted in step S312 is not limited thereto. For example, the reader/writer 300 may convert the distribution data reading request transmitted from the information processing apparatus 400 and transmit the converted distribution data reading request to the IC chip.

The IC chip receives the distribution data reading request transmitted from the reader/writer 300 in step S312, and reads distribution data from the internal memory based on the received distribution data reading request (S314). Then, the IC chip transmits the read distribution data to the reader/writer 300 (S316).

In a case where the distribution data may not be read in step S314, for example, when the distribution data is not stored in the internal memory, the IC chip transmits, to the reader/writer 300, the processing result indicating that the distribution data may not be read.

The reader/writer 300 receives the distribution data transmitted from the IC chip in step S316, and transmits the received distribution data to the information processing apparatus 400 (S318). For example, when the reader/writer 300 receives, from the IC chip, the processing result indicating that the distribution data may not be read, the reader/writer 300 does not perform the processing of step S318. However, the processing of the reader/writer 300 is not limited thereto, when the reader/writer 300 receives, from the IC chip, the processing result indicating that the distribution data may not be read. In the above case, for example, the reader/writer 300 can transmit the processing result indicating that the distribution data may not be read to the information processing apparatus 400. In the following explanation, for example, the reader/writer 300 is assumed to transmit the distribution data to the information processing apparatus 400.

The information processing apparatus 400 receives the distribution data transmitted from the reader/writer 300 in step S318, and determines whether the received distribution data is available or not (S320; distribution data use determination processing).

### [Example of distribution data use determination processing in information processing apparatus 400]

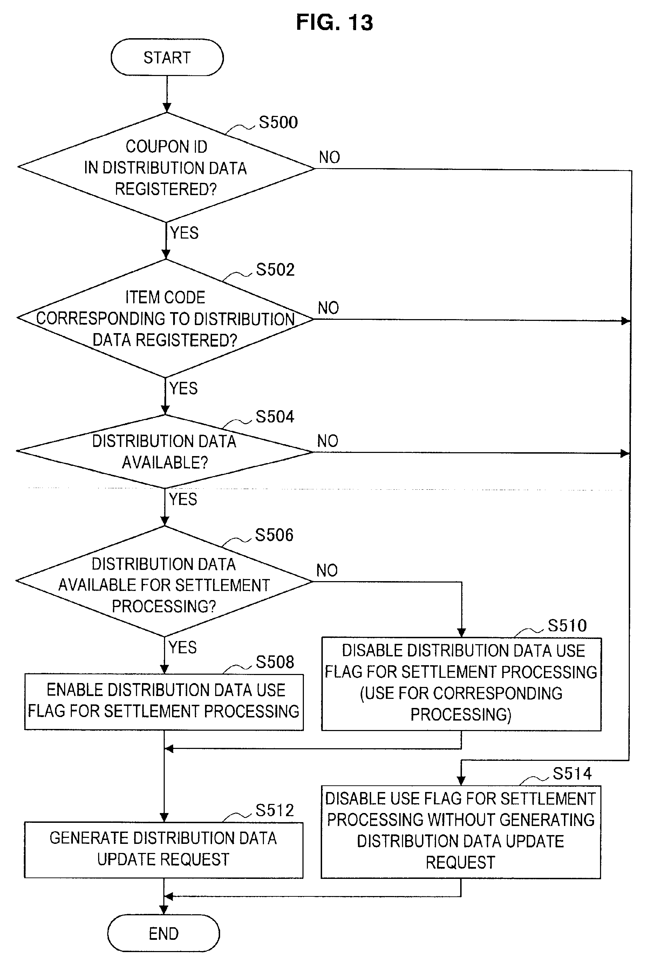

FIG. 13 is a flow diagram illustrating an example of distribution data use determination processing in the information processing apparatus 400 according to the embodiment of the present invention.

The information processing apparatus 400 determines whether the coupon ID included in the distribution data is registered in the stored distribution information element or not (S500).

When the coupon ID is not determined to be registered in the distribution information element in step S500, the information processing apparatus 400 does not generate a distribution data update request for updating distribution data, and disable a distribution data use flag for settlement processing (S514). Herein, the distribution data use flag for settlement processing is a flag used for determining whether the information processing apparatus 400 uses distribution data in later-described settlement processing. In the information processing apparatus 400 according to the embodiment of the present invention, it is to be understood that the method for determining whether distribution data is used ar not in settlement processing is not limited to the method using the flag.

When the coupon ID is determines to be registered in the distribution information element in step S500, the information processing apparatus 400 determines whether an item corresponding to the distribution data (item code identified in step S304) is registered in the distribution information element or not (S502).

When an item code corresponding to the distribution data is not determined to be registered in the distribution information element in step S502, the information processing apparatus 400 does not generate a distribution data update request for updating the distribution data, and disables the distribution data use flag for settlement processing (S514).

When an item code corresponding to the distribution data is determined to be registered in the distribution information element in step S502, the information processing apparatus 400 determines whether the distribution data is available or not (S504).

For example, the information processing apparatus 400 performs the processing of step S504 by determining whether it is within an available period based on information about an available period set in the stored distribution information element (for example, "coupon available period" shown in FIG. 10) and information about a time when the processing is performed. However, the processing of step S504 is not limited thereto. For example, the information processing apparatus 400 can perform the processing of step S504 by determining whether the number of times of allowed use included in the distribution data is 0 (zero) or not.

When the distribution data is not determined to be available data in step S504, the information processing apparatus 400 does not generate a distribution data update request for updating the distribution data, and disables the distribution data use flag for settlement processing (S514).

When the distribution data is determined to be available in step S504, the information processing apparatus 400 determines whether the distribution data can be used for settlement processing or not (S506). For example, the information processing apparatus 400 performs the determination processing of step S506, based on information about benefit content (for example, "benefit content" of FIG. 10) included in the distribution information element corresponding to the distribution data.

When the distribution data is determined to be available for settlement processing in step S506, the information processing apparatus 400 enables the distribution data use flag for settlement processing (S508).

When the distribution data is determined to not be available for settlement processing in step S506, the information processing apparatus 400 disables the distribution data use flag for settlement processing (S510). When the processing of step S510 is performed, the information processing apparatus 400 uses the distribution data for other processing corresponding to the distribution data (for example, processing related to serial campaign).

When the processing of step S508 or step S510 is completed, the information processing apparatus 400 generates a distribution data update request for updating the distribution data stored in the IC chip (S512).

Examples of distribution data update request generated by the information processing apparatus 400 include an instruction for updating information indicating the number of times of allowed use included in the distribution data (for example, subtraction instruction of numeral), a deletion instruction of distribution data stored in the IC chip, and the like. However, the distribution data update request generated by the information processing apparatus 400 is not limited thereto. In the following explanation, the distribution data update request generated by the information processing apparatus 400 is assumed to be an instruction for updating information indicating the number of times of allowed use included in the distribution data.

The information processing apparatus 400 can generate, for the user of the information processing terminal 200, provided information that is to be provided when the distribution data is used (for example, information for allowing the user to view a particular web site, text information, and the like) together with the above distribution data update request. For example, the information processing apparatus 400 can generate provided information according to the coupon ID included in the distribution data (an example of information for identifying benefit service). However, the method for generating provided information in the information processing apparatus 400 is not limited thereto. For example, the information processing apparatus 400 can generate provided information according to a combination of the coupon ID and the medium ID included in the distribution data (information for identifying announcement source).

For example, the information processing apparatus 400 determines whether the received distribution data can be used or not by performing the processing shown in FIG. 13. It is to be understood that the distribution data use determination processing in the information processing apparatus 400 according to the embodiment of the present invention is not limited to the processing shown in FIG. 13.

The first example of processing related to providing of benefit service in the information processing system 1000 will be described with reference to FIG. 8 again. When distribution data update request is generated in step S320, the information processing apparatus 400 transmits the distribution data update request to the reader/writer 300 (S322). When the distribution data update request is not generated in step S320, the information processing apparatus 400 performs the processing of step S332 without transmitting the distribution data update request to the reader/writer 300.

When the provided information is generated together with the distribution data update request, the information processing apparatus 400 can transmit the provided information together with the distribution data update request. In the following explanation, the information processing apparatus 400 is assumed to transmit the distribution data update request to the reader/writer 300 in step S322,

The reader/writer 300 receives the distribution data update request transmitted from the information processing apparatus 400 in step S322, and transmits the distribution data update request to the IC chip (S324).

Herein, although not shown in FIG. 8, the reader/writer 300 performs polling before performing the processing of step S324, and selectively performs the processing of step S324 when the IC chip of the information processing terminal 200 is detected (when the IC chip sends a response to the polling).

For example, when there is no response sent from the IC chip of the information processing terminal 200 in reply to the above polling, or when there is a response sent from an information processing terminal different from the information processing terminal 200, the reader/writer 300 does not perform the processing of step S324. In the above case, the reader/writer 300 transmits the processing result indicating that the updating process of the distribution data is not normally completed (for example, later-described flag information) to the information processing apparatus 400 (S330).

The IC chip receives the distribution data update request transmitted from the reader/writer 300 in step S324, and updates the distribution data stored in the internal memory based on the distribution data update request (S326). Then, the IC chip transmits the processing result of the processing of step S326 to the reader/writer 300 (S328). An example of the processing result includes flag information representing, in the predetermined number of bits, whether the updating process of the distribution data is normally completed or not. However, the processing result of step S328 is not limited thereto.

The reader/writer 300 receives the processing result transmitted from the IC chip in step S328, and transmits the received processing result to the information processing apparatus 400 (S330).

The information processing apparatus 400 receives the processing result transmitted from the reader/writer 300 in step S330, and performs settlement processing selectively using distribution data (S332). For example, when the distribution data use flag for settlement processing is enabled and when the received processing result indicates that the updating process of the distribution data is normally completed, the information processing apparatus 400 performs settlement processing using the distribution data. In other cases, the information processing apparatus 400 performs settlement processing without using the distribution data (so-called normal settlement processing).

When settlement processing is performed in step S332, the information, processing apparatus 400 records a distribution data use log (S334). For example, when the distribution data is not used in step S332, the information processing apparatus 400 does not perform the processing of step S334. In the above case, for example, the information processing apparatus 400 does not perform the later-described processing of S336. However, the processing of the information processing apparatus 400 in the above case is not limited thereto.

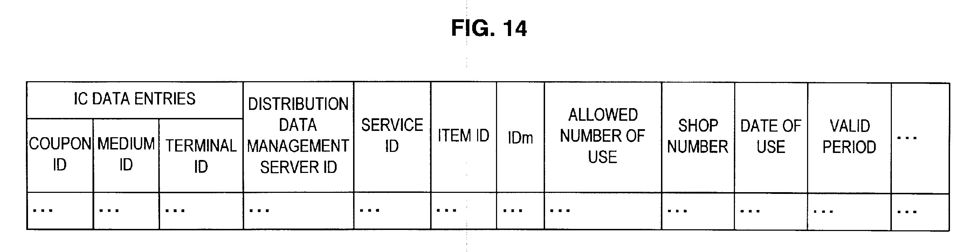

FIG. 14 is an explanatory diagram illustrating an example of a distribution data use log recorded by the information processing apparatus 400 according to the embodiment of the present invention. For example, the information processing apparatus 400 records the distribution data use log based on the processed distribution data and information included in the stored distribution information element. It is to be understood that the distribution data use log recorded by the information processing apparatus 400 according to the embodiment of the present invention is not limited to the example shown in FIG. 14.

The first example of processing related to providing of benefit service in the information processing system 1000 will be described with reference to FIG. 8 again. The information processing apparatus 400 transmits the distribution data use log to the management server 100 (S336). For example, the information processing apparatus 400 performs the processing of step S336 at a regular interval or every time the distribution data use log is recorded in step S334. However, the timing according to which the information processing apparatus 400 performs the processing of step S336 is not limited thereto. For example, the information processing apparatus 400 may perform the processing of step S336 when the information processing apparatus 400 receives a use log acquisition request transmitted from the management server 100.

The management server 100 receives the distribution data use log transmitted from the information processing apparatus 400 in step S336, and records the received distribution data use log (S338).

Herein, the management server 100 records the received distribution data use log itself to the storing means. However, the processing of step S338 is not limited thereto. For example, the management server 100 can also process the received distribution data use log and record the processed distribution data use log.

The management server 100 can also obtain not only the above distribution data use log but also information about logs for various kinds of processing from the distribution server 500 and the distribution data management server 600 via the network 800, so as to record logs related to providing of benefit service in the information processing system 100.

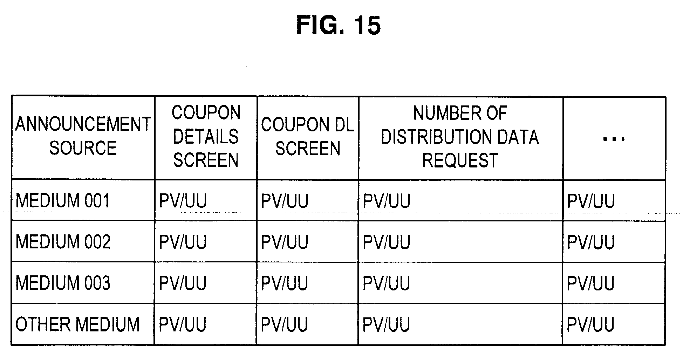

FIG. 15 is an explanatory diagram illustrating an example of a log related to providing of benefit service in the information processing system 1000 according to the embodiment of the present invention. The recorded log as shown in FIG. 15 allows analyzing, for example, which announcement source provides the most frequently used benefit, and accordingly, the log can be used for marketing. It is to be understood that the log related to providing of benefit service in the information processing system 1000 according to the embodiment of the present invention is not limited to the example shown in FIG. 15.

In the information processing system 1000, for example, each apparatus performs the processing shown in FIG. 8, so as to provide benefit service using distribution data stored in the information processing terminal 200 and allow the user of the information processing terminal 200 to receive benefit service.

### (C-2) Second example of processing related to providing of benefit service

The information processing system 1000 performs the processing according to the first example shown in the above (C-1), so as to provide benefit service using distribution data stored in the information processing terminal 200 and allow the user of the information processing terminal 200 to receive benefit service. However, the processing related to providing of benefit service in the information processing system 1000 according to the embodiment of the present invention is not limited to the first example shown in FIG. 8. Accordingly, the second example of processing related to providing of benefit service in the information processing system 1000 according to the embodiment of the present invention will be subsequently described.

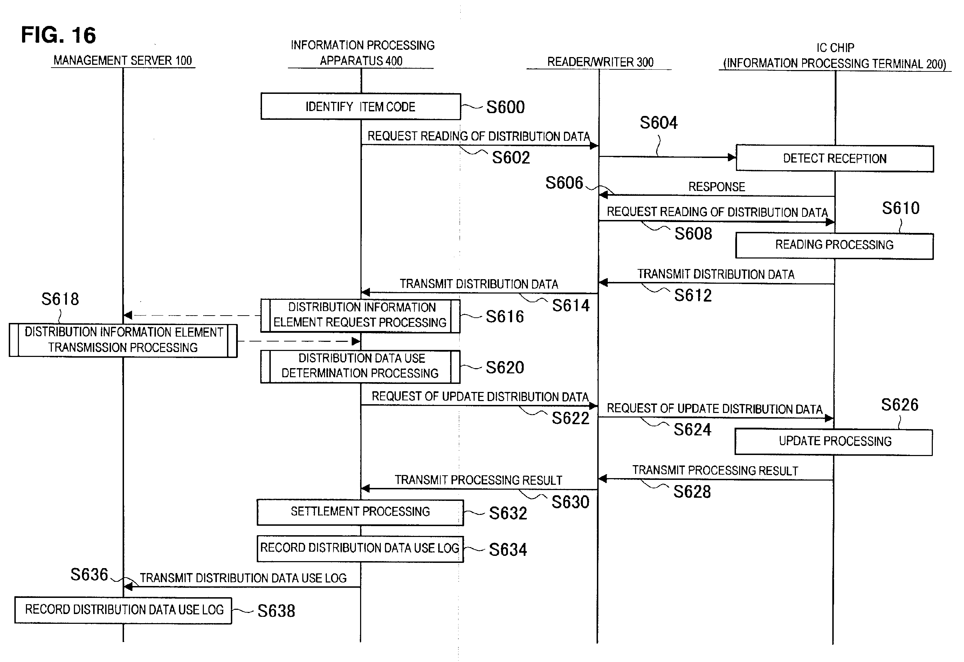

FIG. 16 is an explanatory diagram illustrating the second example of processing related to providing of benefit service in the information processing system 1000 according to the embodiment of the present invention. FIG. 16 explains an example of benefit service using distribution data, in the same manner as the first example shown in FIG. 8. More specifically, in this example, the information processing apparatus 400 uses the distribution data for settlement processing so as to apply discount when an item is purchased.

In the same manner as the first example shown in FIG. 8, FIG. 16 shows a typical constituent element of the information processing terminal 200, namely, an IC chip for performing processing related to communication using a carrier wave of a predetermined frequency. In the following explanation, in the same manner as the first example shown in FIG. 8, the IC chip arranged in the information processing terminal 200 (which may be hereinafter simply referred to as "IC chip") is assumed to store, for example, distribution data as a result of the processing of FIG. 4.

In the same manner as step S304 of FIG. 8, the information processing apparatus 400 identifies an item code of an item which the user of the information processing terminal 200 desires to purchase (S600).

When the information processing apparatus 400 identifies an item code in step S600, the information processing apparatus 400 transmits a distribution data reading request to the reader/writer 300 (S602), in the same manner as step S306 of FIG. 8. When the item code is identified in step S600, for example, the information processing apparatus 400 conveys, to the user of the information processing terminal 200, a message prompting the user to scan the information processing terminal 200 over the reader/writer 300 when the user receives benefit service.

In the same manner as step S308 of FIG. 8, an IC chip of the information processing terminal 200 (hereinafter simply referred to as "IC chip" in FIG. 16) detects reception of a carrier wave transmitted from the reader/writer 300 at a regular/irregular interval or continuously (S604). Then, when reception of a carrier wave is detected in step S604, the IC chip replies that the carrier wave is received (S606), in the same manner as step S310 of FIG. 8.

In the same manner as step S312 of FIG. 8, the reader/writer 300 receives a response transmitted from the IC chip in step S606, and transmits, to the IC chip, a distribution data reading request for transmitting distribution data to the IC chip (S608).

In the same manner as step S314 of FIG.8, the IC chip receives the distribution data reading request transmitted from the reader/writer 300 in step S608, and reads distribution data from the internal memory based on the received distribution data reading request (S610). Then, in the same manner as step S316 of FIG. 8, the IC chip transmits the read distribution data to the reader/writer 300 (S612). In a case where the distribution data may not be read in step S610, for example, when the distribution data is not stored in the internal memory, the IC chip transmits, to the reader/writer 300, the processing result indicating that the distribution data may not be read.

In the same manner as step S318 of FIG. 8, the reader/writer 300 receives the distribution data transmitted from the IC chip in step S612, and transmits the received distribution data to the information processing apparatus 400 (S614). For example, when the reader/writer 300 receives, from the IC chip, the processing result indicating that the distribution data may not be read, the reader/writer 300 does not perform the processing of step S614. However, the processing of the reader/writer 300 is not limited thereto, when the reader/writer 300 receives, from the IC chip, the processing result indicating that the distribution data may not be read. In the above case, for example, the reader/writer 300 can transmit the processing result indicating that the distribution data may not be read to the information processing apparatus 400. In the following explanation, for example, the reader/writer 300 is assumed to transmit the distribution data to the information processing apparatus 400, in the same manner as the first example shown in FIG. 8.

The information processing apparatus 400 receives the distribution data transmitted from the reader/writer 300 in step S614, and selectively transmits, to the management server 100, a distribution information element acquisition request for requesting distribution information element corresponding to the distribution data (S616; distribution information element request processing).

### [Example of distribution information element request processing in information processing apparatus 400]

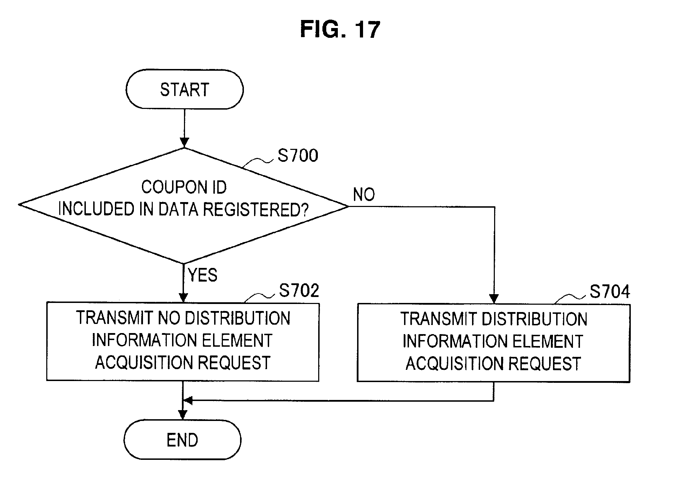

FIG. 17 is a flow diagram illustrating an example of distribution information element request processing in the information processing apparatus 400 according to the embodiment of the present invention.

The information processing apparatus 400 determines whether the coupon ID included in the received distribution data is registered in the stored distribution information element or not (S700).

When the coupon ID is determined to be registered in the distribution information element in step S700, the information processing apparatus 400 does not transmit a distribution information element acquisition request to the management server 100 (S702). When the coupon ID is not determined to be registered in the distribution information element in step S700, the information processing apparatus 400 transmits the distribution information element acquisition request to the management server 100 (S704).

For example, the information processing apparatus 400 performs the processing shown in FIG. 17, so as to selectively transmit the distribution information element acquisition request to the management server 100. It is to be understood that the distribution information element request processing in the information processing apparatus 400 according to the embodiment of the present invention is not limited to the example shown in FIG. 17.

The second example of processing related to providing of benefit service in the information processing system 1000 will be described with reference to FIG. 16 again. The management server 100 receives the distribution information element acquisition request transmitted from the information processing apparatus 400 in step S616, and selectively transmits, to the information processing apparatus 400, distribution information element in reply to the distribution information element acquisition request, based on the received distribution information element acquisition request, the stored distribution information element, and the stored distribution management information element (S618; distribution information element transmission processing).

### [Example of distribution information element transmission processing in management server 100]

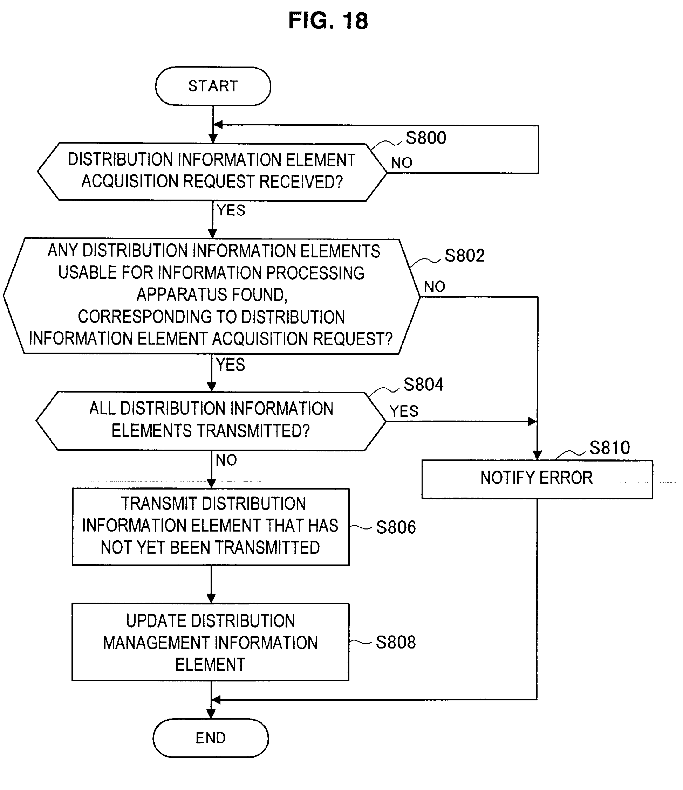

FIG. 18 is a flow diagram illustrating an example of distribution information element transmission processing in the management server 100 according to the embodiment of the present invention.

The management server 100 determines whether the distribution information element acquisition request is received or not (S800).

When the distribution information element acquisition request is not determined to be received in step S800, the management server 100 does not proceed the processing until the distribution information element acquisition request is received. When the distribution information element acquisition request is not determined to be received until a predetermined period of time passes since the transmission request is transmitted, the management server 100 can terminate the processing (a so-called timeout).

When the distribution information element acquisition request is determined to be received in step S800, the management server 100 determines whether there is any distribution information element that can be used by the information processing apparatus 400 corresponding to the distribution information element acquisition request (S802), in the same manner as step S404 of FIG. 9.

When an available distribution information element is not determined to exist in step S802, the management server 100 notifies the information processing apparatus 400 of an error (S810).

When an available distribution information element is determined to exist in step S802, the management server 100 determines whether all the stored distribution information element is transmitted to the information processing apparatus 400 (S804), in the same manner as step S406 of FIG. 9.

When all the distribution information element is determined to be transmitted to the information processing apparatus 400 in step S804, the management server 100 notifies the information processing apparatus 400 of an error (S810).

When all the distribution information element is not determined to be transmitted to the information processing apparatus 400 in step S804, the management server 100 transmits a distribution information element, which has not been transmitted, to the information processing apparatus 400 (S806), in the same manner as step S408 of FIG. 9.

When the distribution information element is transmitted in step S806, the management server 100 updates distribution management information element corresponding to the sent distribution information element to "sent" state (S808), in the same manner as step S410 of FIG. 9.

The management server 100 selectively transmits the distribution information element to the information processing apparatus by performing, for example, the processing as shown in FIG. 18. It is to be understood that the distribution information element transmission processing in the management server 100 according to the embodiment of the present invention is not limited to the example shown in FIG. 18.

The second example of processing related to providing of benefit service in the information processing system 1000 will be subsequently described with reference to FIG. 16 again. When the distribution information element acquisition request is not transmitted in step S616 or when the distribution information element transmitted from the management server 100 is received in step S618, the information processing apparatus 400 determines whether the received distribution data is available or not (S620; distribution data use determination processing), in the same manner as step S320 of FIG. 8.

When the distribution data update request is generated in step S620, the information processing apparatus 400 transmits the distribution data update request to the reader/writer 300 (S622), in the same manner as step S322 of FIG. 8. When the distribution data update request is not generated in step S620, the information processing apparatus 400 performs the processing of step S632 without transmitting the distribution data update request to the reader/writer 300.

The reader/writer 300 receives the distribution data update request transmitted from the information processing apparatus 400 in step S622, and transmits the distribution data update request to the IC chip (S624), like step S324 of FIG. 8.

Herein, although not shown in FIG. 16, the reader/writer 300 performs polling before performing the processing of step S624, and selectively performs the processing of step S624 when the IC chip of the information processing terminal 200 is detected, in the same manner as the first example shown in FIG. 8.

For example, when there is no response sent from the IC chip of the information processing terminal 200 in reply to the above polling, or when there is a response sent from an information processing terminal different from the information, processing terminal 200, the reader/writer 300 does not perform the processing of step S624. In the above case, the reader/writer 300 transmits the processing result indicating that the updating process of the distribution data is not normally completed (for example, later-described flag information) to the information processing apparatus 400 (S630), in the same manner as the first example of FIG. 8.

The IC chip receives the distribution data update request transmitted from the reader/writer 300 in step S624, and updates the distribution data stored in the internal memory, based on the distribution data update request (S626) in the same manner as step S326 of FIG. 8. Then, the IC chip transmits the processing result of the processing of step S626 to the reader/writer 300 (S628), in the same manner as step S328 of FIG. 8.

The reader/writer 300 receives the processing result transmitted from the IC chip in step S628, and transmits the received processing result to the information processing apparatus 400 (S630).

The information processing apparatus 400 receives the processing result transmitted from the reader/writer 300 in step S630, and performs settlement processing selectively using distribution data (S632), in the same manner as step S332 of FIG. 8.

When settlement processing is performed in step S632, the information processing apparatus 400 selectively records a distribution data use log (S634), in the same manner as step S334 of FIG. 8.

The information processing apparatus 400 transmits the distribution data use log to the management server 100 (S636), in the same manner as step S336 of FIG. 8.

The management server 100 receives the distribution data use log transmitted from the information processing apparatus 400 in step S636, and records the received distribution data use log (S638), in the same manner as step S338 of FIG. 8.

In the information processing system 1000, for example, each apparatus performs the processing shown in FIG. 16, so as to provide benefit service using distribution data stored in the information processing terminal 200 and allow the user of the information processing terminal 200 to receive benefit service.

### (C-3) Other example of processing related to providing of benefit service

The information processing system 1000 performs the processing related to the first and second examples shown in the above (C-1) and (C-2), so as to provide benefit service using distribution data stored in the information processing terminal 200 and allow the user of the information processing terminal 200 to receive benefit service. However, the processing related to providing of benefit service in the information processing system 1000 according to the embodiment of the present invention is not limited to the first and second examples.

For example, in the processing according to the second example shown in FIG. 16, the information processing system 1000 can perform the processing of steps S300 and S302 shown in FIG. 8 (pre-processing for providing of benefit service) before step S600 shown in FIG. 16. Herein, the above processing corresponds to a combination of the processing according to the first example shown in FIG. 8 and the processing according to tho second example shown in FIG. 16.

With the above combined processing, the information processing apparatus 400 can increase the chance that the information processing apparatus 400 already has distribution information element corresponding to the distribution data stored in the information processing terminal 200 before the user of the information processing terminal 200 desires to receive benefit service, as compared with the case where the processing according to the second example is used.

With the above combined processing, the information processing apparatus 400 can obtain distribution information element from the management server 100 even when the distribution information element corresponding to the distribution data stored in the information processing terminal 200 is not stored in advance, in the same manner as the processing according to the second example. Therefore, with the above combined processing, the information processing apparatus 400 can increase the chance that the information processing apparatus 400 can process the distribution data stored in the information processing terminal 200, as compared with the case where the processing according to the first example is used.

As described above, for example, the information processing system 1000 goes through the above-described stages (A) to (C), so as to provide the benefit service associated with service to the user of the information processing terminal 200 storing the distribution data.

Herein, the information processing terminal 200 stores, based on operation performed by the user, distribution data based on the distribution information element stored in the management server 100 (the above stages (A), (B)). In other words, the management server 100 of the information processing system 1000 is different from the related art in that the management server 100 is not configured to transmit and store distribution data to an information processing terminal determined based on inference. Therefore, the information processing system 1000 can store distribution data to the information processing terminal whose user desires to receive benefit service in a more reliable manner than apparatus in the related art.

Moreover, in the information processing system 1000, the management server 100 "selectively stores distribution information element stored in the management server 100 to a respective information processing apparatus" and/or "stores, based on distribution information element acquisition request, distribution information element to the information processing apparatus that has transmitted the distribution information element acquisition request"(the above stage (C)). Therefore, the information processing system 1000 provides the information processing terminal with benefit service using the stored distribution data, so as to allow the user of the information processing terminal. 200 to receive benefit service.

Therefore, the information processing system 1000 enables providing the user with service related to benefit associated with service, which is provided using the data stored in the information processing terminal.

### [2] Example of configuration of information processing system according to the embodiment of the present invention

Subsequently, the configuration of each apparatus constituting the information processing system 1000 according to the embodiment of the present invention will be described.

### [Management server 100]

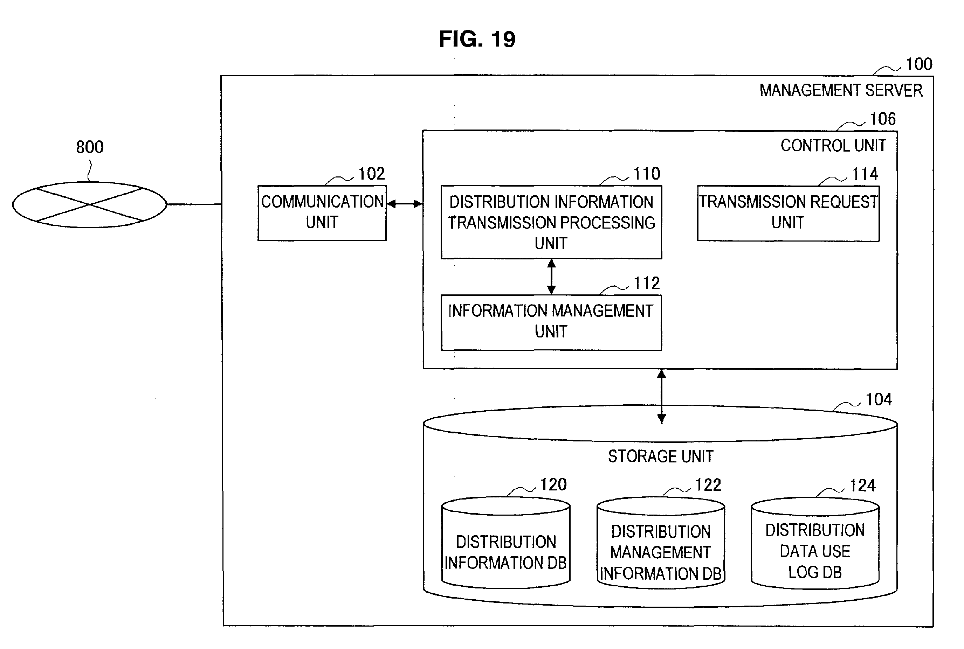

FIG. 19 is an explanatory diagram illustrating an example of configuration of the management server 100 according to the embodiment of the present invention. The management server 100 includes a communication unit 102 (server-side communication unit), a storage unit 104 (server-side storage unit), and a control unit 106.

In addition, the management server 100 may include, for example, a ROM (Read Only Memory; not shown), a RAM (Random Access Memory; not shown), an operation unit (not shown) that can be operated by the user of the management server 100, a display unit (not shown) that displays various kinds of screens on a display screen, and the like. For example, in the management server 100, a bus serving as a data transmission path connects each constituent element.

Herein, the ROM (not shown) stores programs used by the control unit 106 and control data such as computation parameters. The RAM (not shown) primarily stores the programs executed by the control unit 106. An example of the operation unit (not shown) includes a later-described operation input device. An example of the display unit (not shown) includes a later-described display device.

### [Example of hardware configuration of management server 100]

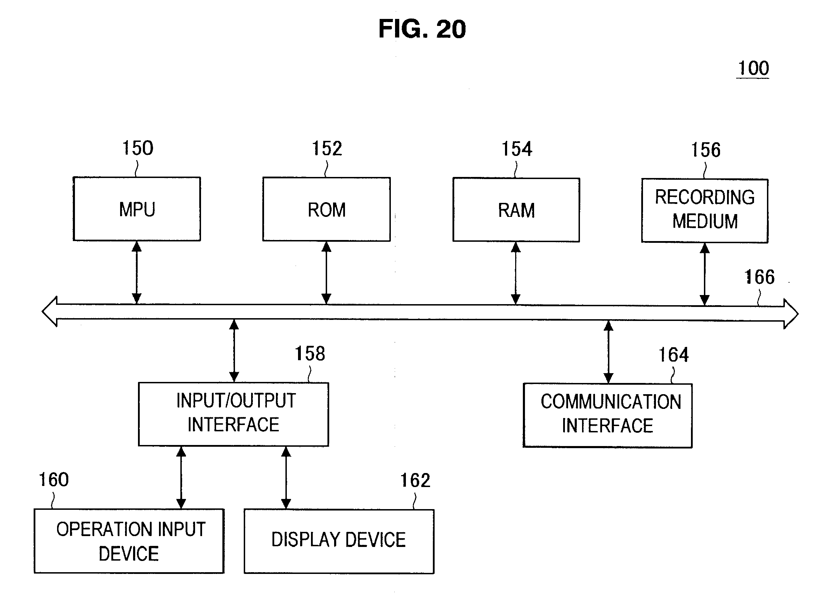

FIG. 20 is an explanatory diagram illustrating an example of hardware configuration of the management server 100 according to the embodiment of the present invention. For example, the management server 100 includes an MPU 150, a ROM 152, a RAM 154, a recording medium 156, an input/output interface 158, an operation input devise 160, a display device 162, and a communication interface 164 with reference to FIG. 20. For example, in the management server 100, a bus 166 serving as a data transmission path connects each constituent element.

The MPU 150 includes an MPU (Micro Processing Unit) and an integrated circuit and the like in which a plurality of circuits achieving control function are integrated. The MPU 150 serves as the control unit 106 controlling the entire management server 100. In the management server 100, the MPU 150 can also play the roles of a distribution information transmission processing unit 110, an information management unit 112, and a transmission request unit 114, which are described later.

The ROM 152 primarily stores programs used by the MPU 150 and control data such as computation parameters, and the RAM 154 primarily stores, for example, programs and the like executed by the MPU 150.

The recording medium 156 is storing means in the management server 100, and serves as the storage unit 104 in the management server 100. The recording medium 156 stores various kinds of data such as distribution information element, distribution management information element, a distribution data use log, announcement source information, various applications, and the like. Examples of the recording medium 156 include a magnetic recording medium such as a hard disk, a nonvolatile memory such as an EEPROM (Electrically Erasable and Programmable Read Only Memory), a flash memory, an MRAM (Magnetoresistive Random Access Memory), a FeRAM (Ferroelectric Random Access Memory), and a PRAM (Phase change Random Access Memory). However, the recording medium 156 is not limited thereto. The management server 100 may also have the recording medium 156 in a detachable manner.

The input/output interface 158 connects to, for example, the operation input device 160 and the display device 162. Examples of the input/output interface 158 include a USB (Universal Serial Bus) terminal, a DVI (Digital Visual Interface) terminal, an HDMI (High-Definition Multimedia Interface) terminal, and various kinds of processing circuits. However, the input/output interface 158 is not limited thereto. It is to be understood that the input/output interface 158 can be connected to a display device (for example, an external display) and an operation input device (for example, a keyboard and a mouse), serving as an external device of the management server 100.

The operation input device 160 serves as an operation unit (not shown). The operation input device 160 is arranged on, for example the management server 100, and is connected to the input/output interface 158 in the management server 100. The operation input device 160 may be, for example, buttons, arrow keys, a rotational selector such as a jog dial, or a combination thereof. However, the operation input device 160 is not limited thereto.

The display device 162 functions as the display unit (not shown) that displays, on a display screen, various kinds of screens such as an operation screen allowing the user to perform desired operation. The display device 162 is arranged on, for example, the management server 100, and is connected to the input/output interface 158 in the management server 100, Examples of the display device 162 include a liquid crystal display (LCD), an organic Electro Luminescence (organic EL) display, or an Organic Light Emitting Diode (OLED) display. However, the display device 162 is not limited thereto.

The communication interface 164 is communication means of the management server 100, and serves as the communication unit 102 for communicating wirelessly or via wire with an external device via the network 800 (or directly). Examples of the communication interface 164 include a communication antenna, an RF circuit (radio communication), a LAN terminal, and a transmission/reception circuit (wire communication). However, the communication interface 164 is not limited thereto. For example, the communication interface 164 may be configured according to the network 800.

For example, with the configuration shown in FIG. 20, the management server 100 performs various processing of the management server 100 of the information processing system 1000. It is to be understood that the hardware configuration of the management server 100 according to the embodiment of the present invention is not limited to the configuration shown in FIG. 20.

An example of configuration of the management server 100 will be described with reference to FIG.19 again. The communication unit 102 is communication means of the management server 100, and communicates wirelessly or via wire with each of the information processing apparatuses constituting the information processing system 1000 and external devices such as the distribution server 500 and the distribution data management server 600 via the network 800 (or directly). Examples of the communication unit 102 include a communication antenna, an RF circuit (radio communication), a LAN terminal, and a transmission/reception circuit (wire communication). However, the communication unit 102 is not limited thereto.

The storage unit 104 is storing means of the management server 100. Examples of the storage unit 104 include a magnetic recording medium such as a hard disk and a nonvolatile memory such as a flash memory. However, the storage unit 104 is not limited thereto.

In addition, the storage unit 104 stores various kinds of data such as distribution information element, distribution management information element, distribution data use log, announcement source information, and various applications. Herein, FIG. 19 shows an example where the storage unit 104 stores a distribution data DB 120, a distribution management information DB 122 storing distribution management information element in a database format, and a distribution data use log DB 124 storing a distribution data use log in a database format. However, the data stored in the storage unit 104 is not limited thereto.

The control unit 106 is constituted by, for example, an MPU and an integrated circuit and the like in which various kinds of processing circuits are integrated. The control unit 106 plays the role of controlling the entire management server 100. In addition, the control unit 106 includes a distribution information transmission processing unit 110, an information management unit 112, a transmission request unit 114, and the like, and plays a leading role in the above-described various kinds of processing performed in the management server 100 of the information processing system 1000. Herein, FIG. 19 shows the configuration (functional blocks) related to the processing of the above stage (C) of the above-described various kinds of processing performed in the management server 100 of the information processing system 1000.

The distribution information transmission processing unit 110 selectively transmits distribution information element according to a distribution information element acquisition request to the information processing apparatus having transmitted the distribution information element acquisition request, based on the distribution information element acquisition request received by the communication unit 102 and based on distribution information element and distribution management information element stored in the storage unit 104.

More specifically, the distribution information element transmission processing unit 110 achieves selective transmission of distribution information element by performing, for example, the processing shown in FIG. 9 (the processing corresponding to the first example of processing related to providing of benefit service) and/or the processing shown in FIG. 18 (the processing corresponding to the second example of processing related to providing of benefit service). However, the method for achieving selective transmission of distribution information element in the distribution information element transmission processing unit 110 is not limited thereto. When the distribution information element transmission processing unit 110 selectively transmits distribution information element by performing the processing shown in FIG. 9 (or the processing related to the other example shown in (C-3)), the distribution information transmission processing unit 110 performs the processing by cooperating with the transmission request unit 114 that selectively transmits the transmission request.

The information management unit 112 cooperates with the distribution information transmission processing unit 110 to selectively update the transmission state of the stored distribution management information element to "sent" state.

More specifically, for example, when the distribution information transmission processing unit 110 transmits distribution information element according to a distribution information element acquisition request by performing the processing of step S410 of FIG. 9 and step S808 of FIG. 18, the information management unit 112 updates distribution management information element corresponding to the transmitted distribution information element to "sent" state.

The transmission request unit 114 transmits an information acquisition request to each information processing apparatus constituting the information processing system 1000.

More specifically, for example, the transmission request unit 114 transmits an information acquisition request by performing the processing of step S400 of FIG. 9.

For example, the control unit 106 includes a distribution information transmission processing unit 110, an information management unit 112, and a transmission request unit 114, and plays a leading role in the above-described various kinds of processing performed in the management server 100 of the information processing system 1000.

However, the configuration of the control unit 106 of the management server 100 according to the embodiment of the present invention is not limited to the example shown in FIG. 19. For example, the control unit 106 according to the embodiment of the present invention may further include an announcement information generation unit (not shown) generating announcement information element based on an announcement information element acquisition request transmitted from the announcement information providing server 700A and the like and based on the stored distribution information element and the stored announcement source information.

For example, the management server 100 uses the configuration shown in FIG. 19 to perform the above-described various kinds of processing in the management server 100 of the information processing system 1000. It is to be understood that the configuration of the management server 100 according to the embodiment of the present invention is not limited to the configuration shown in FIG. 19.

### [Information processing terminal 200 and reader/writer 300]

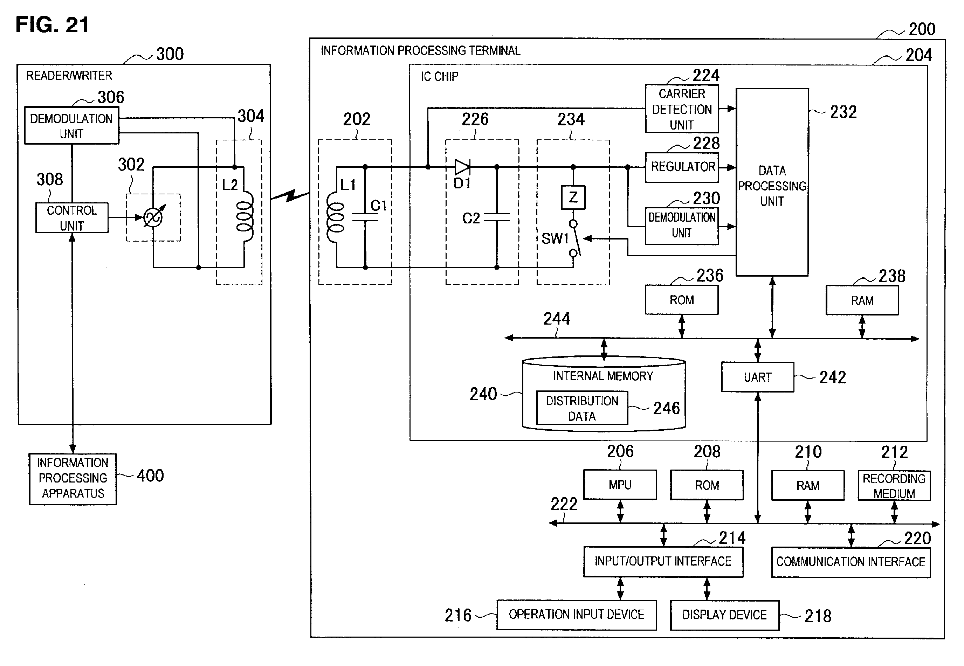

Subsequently, the configurations of the information processing terminal 200 and the reader/writer 300 will be described. The information processing terminal 200 and the reader/writer 300 can perform wireless communication using a carrier wave of a predetermined frequency such as 13.56 MHz (which may be hereinafter simply referred to as "carrier wave"). FIG. 21 is an explanatory diagram illustrating an example of configurations of the information processing terminal 200 and the reader/writer 300 according to the embodiment of the present invention. Herein, FIG. 21 also shows the information processing apparatus 40 connected to the reader/writer 300.

### [Configuration of information processing terminal 200]

The information processing terminal 200 includes a communication antenna 202, an IC chip 204, an MPU 206, a ROM 208, a RAM 210, a recording medium 212, an input/output interface 214, an operation input device 216, a display device 218, and a communication interface 220. For example, in the information processing terminal 200, a bus 222 serving as a data transmission path connects each constituent element.

The communication antenna 202 receives a carrier wave transmitted from an external device such as the reader/writer 300, and transmits a response signal based on a processing result obtained as a result of the processing of the IC chip 204. In the following explanation, for example, the information processing terminal 200 is assumed to process the carrier wave transmitted from the reader/writer 300.

The communication antenna 202 includes, for example, an oscillation circuit including a coil (inductor) L1 having a predetermined inductance and a capacitor C2 having a predetermined capacitance, and generate an induced voltage by electromagnetic induction according to reception of a carrier wave. The communication antenna 202 outputs a reception voltage by resonating the induced voltage at a predetermined resonance frequency. The resonance frequency of the communication antenna 202 is set according to the frequency of the carrier wave such as 13.56 MHz. With the above configuration, the communication antenna 202 receives the carrier wave, and transmits a response signal by causing a load modulation unit 234 (described later) of the IC chip 204 to carry out load modulation.

The IC chip 204 demodulates and processes the carrier wave signal based on the received carrier wave, and uses load modulation to transmit a response signal from the communication antenna 202.

### <Example of configuration of IC chip 204 >

The IC chip 204 includes a carrier detection unit 224, a detection unit 226, a regulator 228, a demodulation unit 230, a data processing unit 232, and a load modulation unit 234. Although not shown in FIG. 21, the IC chip 204 may further include, for example, a protection circuit (not shown) for preventing overvoltage and overcurrent from being applied to the data processing unit 232. Examples of the protection circuit (not shown) include a clamp circuit constituted by diodes and the like. However, the protection circuit (not shown) is not limited thereto.

In addition, the IC chip 204 includes a ROM 236, a RAM 238, an internal memory 240, a UART 242, and the like, For example, the data processing unit 232 is connected by a bus 244 serving as a data transmission path with the ROM 236, the RAM 238, the internal memory 240, and the UART 242.

For example, the carrier detection unit 224 generates a rectangular detection signal based on a reception voltage transmitted from the communication antenna 202, and transmits the detection signal to the data processing unit 232. For example, the data processing unit 232 uses the above transmitted detection signal as a processing clock for data processing. Herein, the above detection signal is based on the reception voltage transmitted from the communication antenna 202, and therefore, the above detection signal is in synchronization with the frequency of the carrier wave transmitted from the reader/writer 300. Therefore, the IC chip 204 having the carrier detection unit 224 can perform the processing with the reader/writer 300 in synchronization with the reader/writer 300.

The detection unit 226 rectifies the reception voltage output from the communication antenna 202. Herein, the detection unit 226 can be made with a diode D1 and a capacitor C2. However, the detection unit 226 is not limited thereto.

The regulator 228 smoothes and regulates the reception voltage into a constant voltage, and outputs a drive voltage to the data processing unit 232. Herein, the regulator 228 can use the direct current component of the reception voltage as a drive voltage.

The demodulation unit 230 demodulates the carrier wave signal based on the reception voltage, and outputs data corresponding to the carrier wave signal included in the carrier wave (for example, a binary data signal, which becomes either high level or low level). Herein, the demodulation unit 230 can output an alternating current component of the reception voltage as data.

The data processing unit 232 uses the drive voltage output from the regulator 228 as a power supply, and the data processing unit 232 processes the data demodulated by the demodulation unit 230. For example, the data processing unit 232 may be structured by an MPU. However, the data processing unit 232 is not limited thereto.

In addition, the data processing unit 232 selectively generates, according to the processing result, a control signal controlling load modulation related to response provided to the reader/writer 300. Then, the data processing unit 232 selectively outputs the control signal to the load modulation unit 234.

In addition, the data processing unit 232 reads and updates data stored in the internal memory 240 based on an instruction included in the data demodulated by the demodulation unit 230 and based on an instruction transmitted from an external constituent element (for example, the MPU 206) of the IC chip 204 via the UART 242.

The load modulatian unit 234 includes, for example, a load Z and a switch SW1. The load modulation unit 234 performs load modulation by selectively connecting (enabling) the load Z according to the control signal transmitted from the data processing unit 232. Herein, the load Z is constituted by, for example, a resistor having a predetermined resistive value. However, the load is not limited thereto. On the other hand, the switch SW1 is constituted by, for example, a p-channel type MOSFET (Metal Oxide Semiconductor Field effect transistor) or an n-channel type MOSFET. However, the switch SW1 is not limited thereto.

The ROM 236 stores control data such as programs and computation parameters which are used by the data processing unit 232. The RAM 238 primarily stores programs executed by the data processing unit 232, computation results, execution states, and the like.

The internal memory 240 is storing means of the IC chip 204, and has, for example, tamper-resistant property. The data processing unit 232 reads data, writes new data, and updates data in the internal memory 240. For example, the internal memory 240 stores various kinds of data such as distribution data, electronic values, and application data. For example, in FIG. 21, the internal memory 240 stores the distribution data 246. However, the data stored in the internal memory 240 are not limited thereto.

The UART 242 is constituted by a UART (Universal Asynchronous Receiver Transmitter). The UART 242 plays the role of a communication interface with an external constituent element of the IC chip 204. For example, in FIG. 21, the UART 242 is connected to the bus 222.

With the above configuration, the IC chip 204 can process the carrier wave signal received by the communication antenna 202, and can transmit a response signal modulated by load modulation from the communication antenna 202.

The MPU 206 serves as a control unit for controlling the entire information processing terminal 200. In addition, the MPU 206 as well as the data processing unit 232 of the IC chip 204 plays a leading role in the above-described various kinds of processing performed in the information processing terminal 200 of the information processing system 1000.

The ROM 208 stores control data such as program and computation parameters used by the MPU 206. On the other hand, the RAM 210 primarily stores programs and the like executed by the MPU 206.

The recording medium 212 serves as a storage unit of the information, processing terminal 200, and stores various kinds of data such as distribution data information element and various kinds of applications. Examples of the recording medium 212 include a magnetic recording medium such as a hard disk and a nonvolatile memory such as an EEPROM, a flash memos an MRAM, a FeRAM, and a PRAM. However, the recording medium 212 is not limited thereto.

The input/output interface 214 connects, for example, the operation input device 216 and the display device 218. Examples of the input/output interface 214 include a USB terminal, a DVI terminal, and a HDMI terminal. However, the input/output interface 214 is not limited thereto. It is to be understood that the input/output interface 214 can be connected to a display device (for example, an external display) and an operation input device (for example, a keyboard and a mouse), serving as an external device of the information processing terminal 200.

The operation input device 216 serves as an operation unit of the information processing terminal 200. The operation input device 216 is arranged on, for example, the information processing terminal 200, and is connected to the input/output interface 214 in the information processing terminal 200. The operation input device 216 may be, for example, buttons, arrow keys, a rotational selector such as a jog dial, or a combination thereof. However, the operation input device 216 is not limited thereto.

The display device 218 plays the role of the display unit that displays, on a display screen, various kinds of screens such as an operation screen allowing the user to perform desired operation. The display device 218 is arranged on, for example, the information processing terminal 200, and is connected to the input/output interface 214 in the information processing terminal 200. Examples of the display device 218 include a liquid crystal display and an organic Electro Luminescence display. However, the display device 218 is not limited thereto.

The communication interface 220 is communication means of the information processing terminal 200 for communicating with an external device via another communication path that is different from the communication path for wireless communication using the carrier wave of the predetermined frequency. The communication interface 220 serves as a communication unit for communicating with an external device such as the distribution server 500, the distribution data management server 600, and the announcement information providing server 700A via the network 800 (or directly). Examples of the communication interface 220 include a communication antenna and an RF circuit (radio communication). However, the communication interface 220 is not limited thereto. For example, the communication interface 220 may be configured according to the network 800.

For example, the information processing terminal 200 may be configured as shown in FIG. 21, so as to perform the above-described various kinds of processing in the information processing terminal 200 of the information processing system 1000.

However, the configuration of the information processing terminal 200 according to the embodiment of the present invention is not limited to the configuration as shown in FIG. 21. For example, the information processing terminal according to the embodiment of the present invention can have an antenna circuit and a processing circuit for receiving the broadcast wave transmitted hy the broadcast station 7008 and the like and processing the broadcast signal included in the received broadcast wave. For example, it is not necessary for the information processing terminal 200 to have, in a form of an IC chip, each constituent element constituting the IC chip 204 as shown in FIG. 21.

### [Reader/writer 300]

The reader/writer 300 includes a carrier wave signal generation unit 302, a carrier wave transmission unit 304, a demodulation unit 306, and a control unit 308. The reader/writer 300 is connected to an external device such as the information processing apparatus 400, and can transmit a carrier wave signal according to a transmission instruction transmitted from the external device. For example, in the following explanation, the configuration of the reader/writer 300 will be described while the reader/writer 300 is assumed to be connected with the information processing apparatus 400.

The reader/writer 300 may include a ROM (not shown), a RAM (not shown), a register (not shown), an encryption circuit (not shown) for encrypting communication, a storage unit (not shown), a connection interface (not shown) for connecting to an external device and another circuit, and the like. For example, in the reader/writer 300, a bus serving as a data transmission path connects each constituent element.

The ROM (not shown) stores programs used by the control unit 308 and control data such as computation parameters. The RAM (not shown) primarily stores programs executed b the control unit 308. Further, the register (not shown) holds computation results and execution states of the control unit 308. The storage unit (not shown) stores, for example, applications and data used in the reader/writer 300.

Examples of the storage unit (not shown) include a magnetic recording medium such as a hard disk and a nonvolatile memory such as a flash memory. However, the storage unit (not shown) is not limited thereto. Examples of the communication interface include a UART, a LAN terminal, and a transmission/reception circuit. However, the connection interface is not limited thereto.

The carrier wave signal generation unit 302 receives a carrier wave signal generation instruction from the control unit 308, and generates a carrier wave signal according to the carrier wave signal generation instruction. In FIG. 21, the carrier wave signal generation unit 302 is assumed to be an alternating current power supply. However, the carrier wave signal generation unit 302 according to the embodiment of the present invention is not limited thereto. For example, the carrier wave signal generation unit 302 according to the embodiment of the present invention may be structured by a modulation circuit (not shown) for modulating a signal according to ASK (Amplitude Shift Keying) modulation and an amplifier circuit (not shown) for amplifying the output of the modulation circuit. It should be noted that the carrier wave signal generated by the carrier wave signal generation unit 302 may include, for example, processed data and various kinds of processing instructions given to the information processing terminal 200. However, the carrier wave signal is not limited thereto. For example, the carrier wave signal according to the embodiment of the present invention may be a signal for causing the carrier wave transmission unit 304 to generate a carrier wave providing electric power to the information processing terminal 200.

The carrier wave transmission unit 304 has, for example a coil (inductor) L2 having a predetermined inductance, and transmits a carrier wave according to a carrier wave signal generated by the carrier wave signal generation unit 302. In addition, the carrier wave transmission unit 304 can also receive a response signal from the information processing terminal 200. In other words, the carrier wave transmission unit 304 can serve as a communication antenna of the reader/writer 300. For example, in FIG. 21, the carrier wave transmission unit 304 is made by the coil L2. However, the carrier wave transmission unit 304 according to the embodiment of the present invention is not limited thereto. For example, a resonance circuit may be structured by further arranging a capacitor.

For example, the demodulation unit 306 performs envelope detection on the variation of the amplitude of voltage at the end of the antenna of the carrier wave transmission unit 304, and converts the detected signal into binary values, thus demodulating the response signal from the information processing terminal 200. The means for modulating the response signal in the demodulation unit 306 is not limited to thereto. For example, the response signal can also be demodulated by using the variation of the phase of voltage at the end of the antenna of the carrier wave transmission unit 304.

For example, the control unit 308 is structured by an MPU. The control unit 308 can perform various kinds of processing such as transmitting the data demodulated by the demodulation unit 306 to the information processing apparatus 400 or generating a carrier wave signal generation instruction based on the data demodulated by the demodulation unit 306.

For example, the reader/writer 300 is configured as shown in FIG. 21, so as to transmit a carrier wave and demodulate a response signal transmitted from the information processing terminal 200. It is to be understood that the configuration of the reader/writer 300 according to the embodiment of the present invention is not limited to the configuration as shown in FIG. 21.

### [Information processing apparatus 400]

Subsequently, the configuration of the information processing apparatus constituting the information processing system 1000 according to the embodiment of the present invention will be described. In the following explanation, one of the information processing apparatuses constituting the information processing system 1000, i.e., the information processing apparatus 400 shown in FIG. 1, will be described as an example.

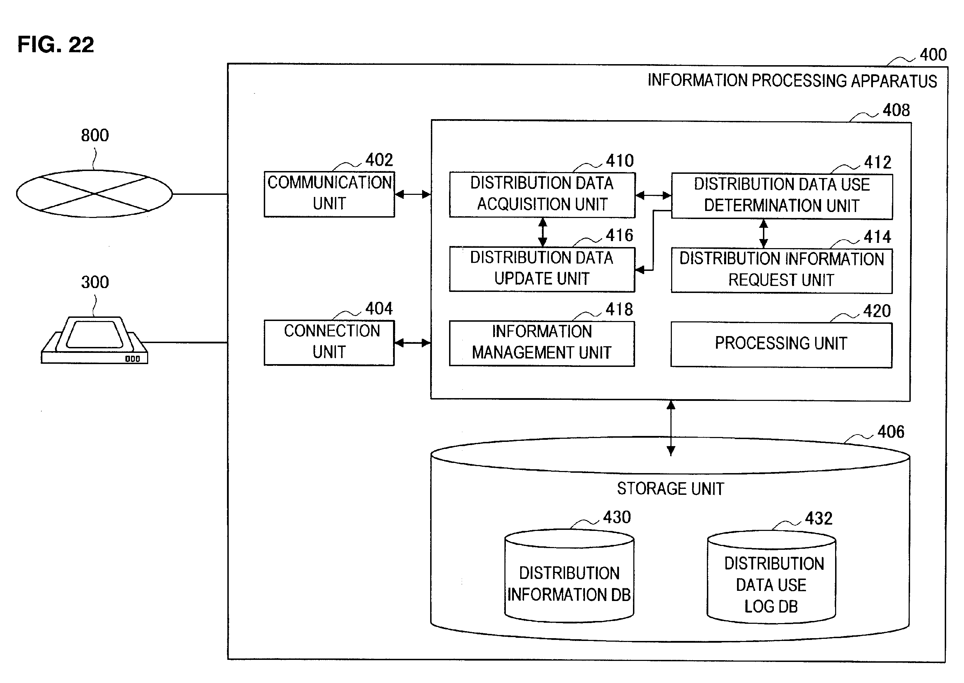

FIG. 22 is an explanatory diagram illustrating an example of configuration of the information processing apparatus 400 according to the embodiment of the present invention. The information processing apparatus 400 includes a communication unit 402 (apparatus-side communication unit), a connection unit 404, a storage unit 406 (apparatus-side storage unit), and a control unit 408.

In addition, the information processing apparatus 400 may include, for example, a ROM (not shown), a RAM (not shown), an operation unit (not shown) that can be operated by the user of the information processing apparatus 400, and a display unit (not shown) for displaying various screens on a display screen. For example, in the information processing apparatus 400, a bus serving as a data transmission path connects each constituent element.

Herein, the ROM (not shown) stores programs used by the control unit 408 and control data such as computation parameters. The RAM (not shown) primarily stores programs executed by the control unit 408. An example of the operation unit (not shown) includes a later-described operation input device. An example of the display unit (not shown) includes a later-described display device.

### [Example of hardware configuration of information processing apparatus 400]

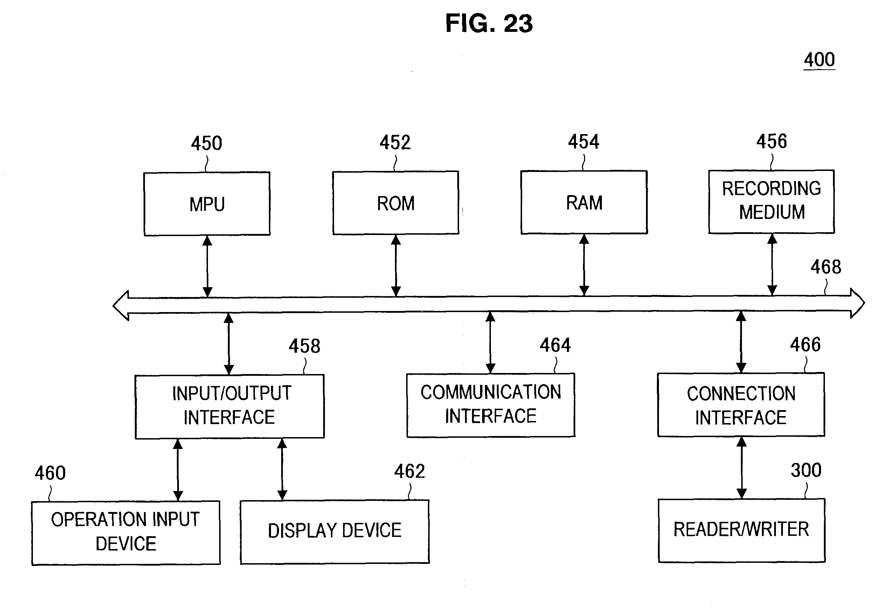

FIG. 23 is an explanatory diagram illustrating an example of hardware configuration of the information processing apparatus 400 according to the embodiment of the present invention. Herein, FIG. 23 also shows the reader/writer 300.

The information processing apparatus 400 includes, for example, an MPU 450, a ROM 452, a RAM 454, a recording medium 456, an input/output interface 458, an operation input device 460, a display device 462, a communication interface 464, and a communication interface 466 with reference to FIG. 23. For example, in the information processing apparatus 400, a bus 468 serving as a data transmission path connects each constituent element.

The MPU 450 includes an MPU and an integrated circuit and the like in which a plurality of circuits achieving control function are integrated. The MPU 450 serves as the control unit 408 controlling the entire information processing apparatus 400. In addition, in the information processing apparatus 400, the MPU 450 can also serve as a distribution data acquisition unit 410, a distribution data use determination unit 412, a distribution information request unit 414, a distribution data update unit 416, an information management unit 418, and a processing unit 420, which will be described later.

The ROM 452 stores programs used by the MPU 450 and control data such as computation parameters. The RAM 454 primarily stores, for example, programs executed by the MPU 450.

The recording medium 456 is storing means of the information processing apparatus 400, and serves as the storage unit 406 of the information processing apparatus 400. The recording medium 456 stores various kinds of data such as distribution information element, distribution data use log, various kinds of applications, and the like. Examples of the recording medium 456 include a magnetic recording medium such as a hard disk and a nonvolatile memory such as a flash memory. However, the recording medium 456 is not limited thereto. The information processing apparatus 400 may also have the recording medium 456 in a detachable manner.

The input/output interface 458 is connected to, for example, the operation input device 460 and the display device 462. Examples of the input/output interface 458 include a USB terminal, a DVI terminal, a HDMI terminal, and various kinds of processing circuits. However, the input/output interface 458 is not limited thereto. It is to be understood that the input/output interface 458 can be connected to a display device (for example, an external display) and an operation input device (for example, a keyboard and a mouse), serving as an external device of the information processing apparatus 400.

The operation input device 460 serves as an operation unit (not shown). For example, the operation input device 460 is arranged on the information processing apparatus 400, and is connected to the input/output interface 458 in the information processing apparatus 400. The operation input device 460 may be, for example, buttons, arrow keys, a rotational selector such as a jog dial, or a combination thereof. However. the operation input device 460 is not limited thereto.

The display device 462 plays the role of the display unit (not shown) that displays, on a display screen, various kinds of screens such as an operation screen allowing the user to perform desired operation. The display device 462 is arranged on, for example, the information processing apparatus 400, and is connected to the input/output interface 458 in the information processing apparatus 400. Examples of the display device 462 include a liquid crystal display and an organic Electro Luminescence display. However, the display device 462 is not limited thereto.

The communication interface 464 is communication means of the information processing apparatus 400, and serves as a communication unit for communicating wirelessly or via wire with an external device such as the management server 100 and a gateway server (not shown) via the network 800 (or directly). Examples of the communication interface 464 include a communication antenna, an RF circuit (wireless communication), a LAN terminal, and a transmission/reception circuit (wire communication). However, the communication interface 464 is not limited thereto. For example, the communication interface 464 may be configured according to the network 800.

The connection interface 466 is an interface for connecting to an apparatus having reader/writer function (function for voluntarily transmitting a carrier wave) such as the reader/writer 300. Examples of the connection interface 466 include, for example, a UART and a LAN terminal, and a transmission/reception circuit. However, the connection interface 466 is not limited thereto.

For example, the information processing apparatus 400 has the hardware configuration as shown in FIG. 22, so as to perform the above-described various kinds of processings in the information processing apparatus 400 of the information processing system 1000.

It should be noted that the hardware configuration of the information processing apparatus 400 according to the embodiment of the present invention is not limited to the configuration as shown in FIG. 22. For example, the information processing apparatus according to the embodiment of the present invention may have the configuration for performing wireless communication using a carrier wave of a predetermined frequency so as to achieve the same role as the reader/writer 300.

An example of the above configuration for performing wireless communication using a carrier wave of a predetermined frequency include a configuration having a wireless communication antenna circuit and a carrier wave transmission circuit arranged in the information processing apparatus according to the embodiment of the present invention.

The wireless communication antenna circuit includes, for example, a resonance circuit serving as a transmission/reception antenna having a coil of a predetermined inductance and a capacitor of a predetermined capacitance and a demodulation circuit. For example, the wireless communication antenna circuit receives a magnetic field (carrier wave) of 13.56 MHz, so as to demodulate various kinds of data transmitted from an external device. With the above configuration, the wireless communication antenna circuit demodulates a carrier wave (for example, diamagnetic filed generated by load modulation) transmitted from the information processing terminal 200, and obtains various kinds of information such as the distribution data stared in the information processing terminal 200.

For example, the carrier wave transmission circuit includes a modulation circuit for modulating a signal according to ASK modulation and an amplifier circuit for amplifying the output of the modulation circuit, and transmits a carrier wave carrying a carrier wave signal from the transmission/reception antenna of the wireless communication antenna circuit. With the carrier wave transmission circuit, the information processing apparatus 400 can achieve a so-called reader/writer function. Examples of the carrier wave signal transmitted from the wireless communication antenna circuit by the carrier wave transmission circuit include a distribution data reading request and a distribution data update request. However, the carrier wave signal is not limited thereto. For example, the MPU controls the transmission of the carrier wave of the carrier wave transmission circuit.

The information processing apparatus according to the embodiment of the present invention has, for example, the above wireless communication antenna circuit and the above carrier wave transmission circuit. Therefore, the information processing apparatus according to the embodiment of the present invention can further achieve the role of the reader/writer 300 in the information processing system 1000.

An example of configuration of the information processing apparatus 400 will be described with reference to FIG. 22 again. The communication unit 402 is communication means of the information processing apparatus 400, and communicates wirelessly or via wire with an external device such as the management server 100 and a gateway server (not shown) via the network 800 (or directly). Examples of the communication unit 402 include a communication antenna, an RF circuit (wireless communication), a LAN terminal, and a transmission/reception circuit (wire communication). However, the communication unit 402 is not limited thereto.

The connection unit 404 plays the role of connecting to an apparatus having reader/writer function (function for voluntarily transmitting a carrier wave) such as the reader/writer 300. Examples of the connection unit 404 include, for example, a UART and a LAN terminal, and a transmission/reception circuit. However, the connection unit 404 is not limited thereto.

The storage unit 406 is storing means of the information processing apparatus 400. Examples of the storage unit 406 include a magnetic recording medium such as a hard disk and a nonvolatile memory such as a flash memory. However, the storage unit 406 is not limited thereto.

The storage unit 406 stores, for example, various kinds of data such as distribution information element, a distribution data use log, and various kinds of applications. For example, in FIG. 22, the storage unit 406 stores a distribution data DB 430 and a distribution data use log DB 432 storing a distribution data use log in a database format. However, the data stored in the storage unit 406 is not limited thereto.

The control unit 408 is constituted by, for example, an MPU and an integrated circuit and the like in which various kinds of processing circuits are integrated. The control unit 408 plays the role of controlling the entire information processing apparatus 400. In addition, the control unit 408 includes the distribution data acquisition unit 410, the distribution data use determination unit 412, the distribution information request unit 414, the distribution data update unit 416, the information management unit 418, and the processing unit 420, and plays a leading role in the above-described various kinds of processings performed in the information processing apparatus 400 of the information processing system 1000.

The distribution data acquisition unit 410 obtains distribution data stored in an information processing terminal capable of wireless communication using a carrier wave of a predetermined frequency such as the information processing terminal 200.

More specifically, for example, the distribution data acquisition unit 410 obtains distribution data stored in the information processing terminal via the reader/writer 300 by performing the processings of step S306 shown in FIG. 8 and step S602 shown in FIG. 18.

The distribution data use determination unit 412 determines whether distribution data is available or not, based on distribution data obtained from the processing of the distribution data acquisition unit 410 and the stored distribution information element.

More specifically, for example, the distribution data use determination unit 412 performs the processing shown in FIG. 13, so as to determine whether distribution data is available or not.

Herein, the distribution data use determination unit 412 determines whether the storage unit 406 has distribution information element corresponding to the obtained distribution data, and transmits the determination result to the distribution information request unit 414. When the distribution data use determination unit 412 receives distribution information element transmitted from the management server 100 as a result of the later-described processing of the distribution information request unit 414, the distribution data use determination unit 412 determines whether distribution data is available or not based on the received distribution information element and the distribution data.

It should be noted that the distribution data use determination unit 412 and the distribution information request unit 414 cooperates to perform the processing when the control unit 408 of the information processing apparatus 400 has the function of performing the processing according to the second example shown in the above (C-2) (or the processing according to the other example shown in the above (C-3)). In FIG. 22, when the information processing apparatus according to the embodiment of the present invention does not have the above function (for example, it is configured to perform the processing according to the first example shown in the above (C-1)), the distribution data use determination unit 412 and the distribution information request unit 414 do not cooperate to perform the processing.

The distribution data use determination unit 412 transmits the determination result to the distribution data update unit 416. Herein, the distribution data use determination unit 412 transmits a determination result to the distribution data update unit 416 every time the distribution data use determination unit 412 makes a determination. However, the timing when the distribution data use determination unit 412 transmits a determination result to the distribution data update unit 416 is not limited thereto. For example, when the distribution data use determination unit 412 determines that distribution data is available, the distribution data use determination unit 412 can selectively transmit to the distribution data update unit 416 the determination result indicating that the distribution data is available.

When the distribution data use determination unit 412 determines that distribution information element corresponding to the distribution data is not stored, the distribution information request unit 414 requests the acquisition of the distribution information element corresponding to the distribution data.

More specifically, the distribution information request unit 414 performs the processing of step S616 shown in FIG. 16, so as to selectively transmit a distribution information element acquisition request to the communication unit 402.

The distribution information request unit 414 can also transmit a distribution information element acquisition request to the communication unit 402 based on a transmission request received by the communication unit 402. The above transmission of the distribution information element acquisition request based on the received transmission request is performed when the control unit 408 of the information processing apparatus 400 has the function of performing the processing according to the first example shown in the above (C-1) (or the processing according to the other example shown in the above (C-3)).

When the distribution data use determination unit 412 determines that distribution data is available, the distribution data update unit 416 updates distribution data stored in the information processing terminal corresponding to the distribution data.

More specifically, the distribution data update unit 416 performs, for example, the processings of step 5322 shown in FIG. 8 and step S622 shown in FIG. 18, so as to update the distribution data stored in the information processing terminal via the reader/writer 300.

When the communication unit 402 receives distribution information element transmitted from the management server 100, the information management unit 418 stores the received distribution information element to the storage unit 406. Moreover, the information management unit 418 reads a distribution data use log stored in the storage unit 406 from the storage unit 406, and selectively transmits the distribution data use log to the management server 100.

The processing unit 420 performs various kinds of processings such as the settlement processing shown in step S332 and the identification of item code shown in step S304 of FIG. 8.

For example, the control unit 106 includes the distribution data acquisition unit 410, the distribution data use determination unit 412, the distribution information request unit 414, the distribution data update unit 416, the information management unit 418, and the processing unit 420, and plays a leading role in the above-described various kinds of processings performed in the information processing apparatus 400 of the information processing system 1000.

For example, the information processing apparatus 400 is configured as shown in FIG. 22, so as to perform the above-described various kinds of processings in the information processing apparatus 400 of the information processing system 1000. It is to be understood that the configuration of the information processing apparatus 400 according to the embodiment of the present invention is not limited to the configuration shown in FIG. 22.

### [Distribution server 500]

For example, the distribution server 500 has the same hardware configuration as the management server 100 as shown in FIG. 20. When the distribution server 500 has the above configuration, the MPU of the distribution server 500 plays a leading role in the above-described various kinds of processings in the distribution server 500 of the information processing system 1000. It is to be understood that the configuration of the distribution server 500 according to the embodiment of the present invention is not limited to the same configuration as the management server 100 shown in FIG. 20.

### [Distribution data management server 600]

For example, the distribution data management server 600 has the same hardware configuration as the management server 100 shown in FIG. 20. When the distribution data management server 600 has the above configuration, the MPU of the distribution data management server 600 plays a leading role in above-describe various kinds of processings in the distribution data management server 600 of the information processing system 1000. It is to be understood that the configuration of the distribution data management server 600 according to the embodiment of the present invention is not limited to the same configuration as the management server 100 shown in FIG. 20.

As described above, the information processing system 1000 according to the embodiment of the present invention includes the management server 100, the information processing terminal 200, the reader/writer 300, the information processing apparatus 400, the distribution server 500, and the distribution data management server 600. The information processing system 1000 goes through (A) stage for installing announcement information element, (B) stage for recording distribution data to information processing terminal 200, and (C) stage for providing of benefit service, thus providing benefit service associated with service to the user of the information processing terminal 200. Based on user operation, the information processing terminal 200 stores distribution data based on the distribution information element stored in the management server 100 (the above stages (A) and (B)). In other words, the management server 100 of the information processing system 1000 is different from the related art in that the management server 100 is not configured to transmit and store distribution data to an information processing terminal determined based on inference. Therefore, the information processing system 1000 can store distribution data to the information processing terminal whose user desires to receive benefit service in a more reliable manner than apparatus in the related art.

Moreover, in the information processing system 1000, the management server 100 "selectively stores distribution information element stored in the management server 100 to a respective information processing apparatus" and/or "stores, based on distribution information element acquisition request, distribution information element to the information processing apparatus that has transmitted the distribution information element acquisition request"(the above stage (C)). Therefore, the information processing apparatus 400 can increase the chance that the information processing apparatus 400 already has distribution information element corresponding to the distribution data stored in the information processing terminal 200 before the user of the information processing terminal 200 desires to receive benefit service (processing according to the first example/processing related to the other example). Moreover, in the information processing system 1000, the information processing apparatus 400 can selectively obtain distribution information element from the management server 100. Therefore, the information processing apparatus 400 can increase the chance that the information processing apparatus 400 can process the distribution data stored in the information processing terminal 200 (processing according to the second example / processing related to the other example).

Therefore, the information processing system 1000 enables providing the user with service related to benefit associated with service, which is provided using the data stored in the information processing terminal.

In the information processing system 1000, for example, each of the information processing apparatus 400, the distribution server 500, and the distribution data management server 600 can record a log related to recording of distribution data to the information processing terminal 200 and a log related to use of the distribution data. Therefore, for example, the information processing system 1000 can keep track of which announcement source (medium) announced the used coupon and which use used the coupon. In addition, when the above various kinds of logs are used, the information processing system 1000 can specify, for example, the number of distributed coupons and the number of times the coupons are used for each used store and each announcement source. Therefore, for example, the information processing system 1000 can achieve the following.

A company and the like which announces a coupon can measure more accurately the cost effectiveness with respect to the advertising cost (sales promotion cost) of the announcement source used for announcement (measurement based on the number of distributed coupons and the number of times the coupons are used).

This can be used to liquidate the source of money for discount (between the company and the stores) according to the number of times the coupons are used, and can be used to pay a commission cost to an announcement source according to the announcement effect.

In the above explanation, the management server 100, the distribution server 500, and the distribution data management server 600 are described as constituent elements constituting the information processing system 1000 according to the embodiment of the present invention. However, the embodiment of the present invention is not limited thereto. The embodiment of the present invention can be applied to various kinds of apparatuses such as computers such as a server and a PC (Personal Computer).

The information processing terminal 200 is described as a constituent element constituting the information processing system 1000 according to the embodiment of the present invention. However, the embodiment of the present invention is not limited thereto. For example, the embodiment of the present invention may be applied to various kinds of devices capable of wireless communication using a carrier wave of a predetermined frequency (for example, communication by NFC (Near Field Communication)), such as a portable communication device such as a portable telephone having a non-contact IC chip, a video/music reproduction device (or a video/music recording/reproduction device), a portable game machine, and the like.

The reader/writer 300 is described as a constituent element constituting the information processing system 1000 according to the embodiment of the present invention. However, the embodiment of the present invention is not limited thereto. For example, the embodiment of the present invention can be applied to various kinds of devices having reader/writer function.

The information processing apparatus 400 is described as a constituent element constituting the information processing system 1000 according to the embodiment of the present invention. However, the embodiment of the present invention is not limited thereto. For example, the embodiment of the present invention can be applied to various kinds of devices such as a computer such as a server and a PC, a POS device, and the like.

### (Program according to the embodiment of the present invention)

A program for causing a computer to function as the management server according to the embodiment of the present invention "can selectively store distribution information element to a respective information processing apparatus" and/or "can store, based on distribution information element acquisition request, distribution information element to the information processing apparatus that has transmitted the distribution information element acquisition request". Therefore, the program for causing a computer to function as the management server according to the embodiment of the present invention enables providing the user with service related to benefit associated with service, which is provided using the data stored in the information processing terminal.

A program for causing a computer to function as the information processing apparatus 400 according to the embodiment of the present invention enables providing the user with service related to benefit associated with service, which is provided using the data stored in the information processing terminal.

A program for causing a computer to function as the information processing terminal 200, the distribution server 500, the distribution data management server 600 according to the embodiment of the present invention enables providing the user with service related to benefit associated with service, which is provided using the data stored in the information processing terminal.

It should be understood by those skilled in the art that various modifications, combinations, sub-combinations and alterations may occur depending on design requirements and other factors insofar as they are within the scope of the appended claims or the equivalents thereof.

For example, in the management server 100 in FIG. 19, the control unit 106 is configured to include the distribution information transmission processing unit 110, the information management unit 112, and the transmission request unit 114. However the configuration of the management server according to the embodiment of the present invention is not limited thereto. For example, the management server according to the embodiment of the present invention may separately include any constituent element of the distribution information transmission processing unit 110, the information management unit 112, and the transmission request unit 114 shown in FIG. 19 (for example, each of them may be achieved by a separate processing circuit.).

For example, in the information processing apparatus 400 shown in FIG. 22, the control unit 408 is configured to include the distribution data acquisition unit 410, the distribution data use determination unit 412, the distribution information request unit 414, the distribution data update unit 416, the information management unit 418, and the processing unit 420. However, the configuration of the information processing apparatus according to the embodiment of the present invention is not limited thereto. For example, the information processing apparatus according to the embodiment of the present invention may separately include any constituent element of the distribution data acquisition unit 410, the distribution data use determination unit 412, the distribution information request unit 414, the distribution data update unit 416, the information management unit 418, and the processing unit 420 shown in FIG. 22 (for example, each of them may be achieved by a separate processing circuit.).

In the above explanation, programs (computer programs) are provided to respectively function as the management server, the information processing terminal, the information processing apparatus, the distribution server, and the distribution data management server according to the embodiment of the present invention. However, the embodiment of the present invention can also provide storage media storing the above programs.

It should be understood by those skilled in the art that various modifications, combinations, sub-combinations and alterations may occur depending on design requirements and other factors insofar as they are within the scope of the appended claims or the equivalents thereof.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the present invention as defined by the appended claims.

## Claims

1. An information processing terminal, comprising:
a communication section (202) that communicates with an external device (300);
a memory (240) that stores a coupon identifier (ID) which identifies benefit information stored outside of the information processing terminal (200); and
a processor (232) that controls communication carried out by the communication section (202), including: (i) receiving a request from the external device (300) for the coupon ID, (ii) reading the coupon ID from the memory based on the received request, and (iii) transmitting the coupon ID to the external device (300).

2. The information processing terminal according to claim 1, wherein the benefit information is associated with at least one of (i) a transaction or (ii) a type of transaction.

3. The information processing terminal according to claim 1, wherein the communication section (202) carries out communication with the external device (300) using at least one of (i) wireless communication or (ii) wired communication.

4. An integrated circuit (IC) chip disposable within an information processing terminal (200), the IC chip (204) comprising:
a memory (240) that stores a coupon identifier (ID) which identifies benefit information stored outside of the information processing terminal (200); and
a processor (232) that controls communication between the information processing terminal (200) and an external device (300), including: (i) receiving a request from the external device (300) for the coupon ID, (ii) reading the coupon ID from the memory (240) based on the received request, and (iii) transmitting the coupon ID to the external device (300).

5. An information processing apparatus, comprising:
a communication unit (402) that communicates with at least one information, processing terminal (200);
a storage unit (406) that stores distribution information which includes benefit information; and
a control unit (408) that controls the communication carried out by the communication unit (402), including transmitting a request to the at least one information processing terminal (200) for a coupon identifier (ID) which identifies the benefit information, and receiving the requested coupon ID from the at least one information processing terminal (200).

6. The information processing apparatus according to claim 5, wherein the control unit (408) determines whether the received coupon ID is valid, and in response to the received coupon ID being determined to be valid, carries out settlement processing using at least a portion of the stored distribution information.

7. The information processing apparatus according to claim 5, wherein the control unit (408) determines whether the stored distribution information is available, and in response to the stored distribution information being determined to be available, carries out settlement processing using at least a portion of the stored distribution information.

8. The information processing apparatus according to claim 5, wherein the distribution information further includes at least one of: (a) information regarding a source associated with the benefit information, (b) information regarding an item associated with the benefit information, (c) information regarding a region associated with the benefit information, (d) information regarding a service provider associated with the benefit information, (e) information regarding a location associated with the benefit information, (f) information regarding a time period associated with the benefit information, (g) information regarding an announcement medium associated with the benefit information, and (h) information regarding a limitation of use associated with the benefit information.

9. A management server, comprising:
a communication unit (102) that communicates with at least one information processing apparatus (400);
a storage unit (104) that stores identification information identifying the at least one information processing apparatus (400) and related information about attributes associated with the at least one information processing apparatus (400), and stores distribution information which includes benefit information; and
a control unit (106), including:
a transmission request unit (114) that receives, through the communication unit (102), a request for distribution information from the at least one information processing apparatus (400), and
an information processing unit (110) that (i) selects at least a portion of the stored distribution information based on the stored attributes associated with the at least one information processing apparatus (400), the selected distribution information including the benefit information, and (ii) transmits the selected distribution information to the at least one information processing apparatus (400) through the communication unit (102).

10. The management server according to claim 9, wherein the control unit (106) further includes an information management unit (112) that updates the stored distribution information in response to the selected distribution information being transmitted to the at least one information processing apparatus (400).

11. The management server according to claim 9, wherein the request for distribution information includes at least one of: (a) the identification information identifying the at least one information processing apparatus (400), (b) information regarding a region associated with a service, (c) information regarding a source associated with the service, or (d) information regarding a location associated with the service.

12. The management server according to claim 9, wherein the related information includes at least one of: (a) information regarding a region associated with the at least one information processing apparatus (400), (b) information regarding a source associated with the at least one information processing apparatus (400), (c) information regarding a location associated with the at least one information processing apparatus (400), or (d) information regarding communication with the at least one information processing apparatus (400).

13. A system, comprising:
an information processing terminal (200);
a reader/writer apparatus (300); and
an information processing apparatus (400), including:
a communication unit (402) that communicates with the information processing terminal (200) through the reader/writer apparatus (300),
a storage unit (406) that stores distribution information which includes benefit information, and
a control unit (408) that controls communication carried out by the communication unit (402) including transmitting a request to the information processing terminal (200) for a coupon identifier (ID) which identifies the distribution information stored in the storage unit (406), and receiving the requested coupon ID from the information processing terminal (200);
the information processing terminal (200) including:
a communication section (202) that communicates with the information processing apparatus (400) through the reader/writer apparatus (300),
a memory, (240) that stores the coupon ID, and
a processor (232) that controls communication with the information processing apparatus (400), including: (i) receiving the request from the information processing apparatus (400) for the coupon ID, (ii) reading the coupon ID from the memory (240) based on the received request, and (iii) transmitting the coupon ID to the information processing apparatus (400).

14. The system according to claim 13, wherein the communication unit (402) of the information processing apparatus (400) and the communication section (202) of the information processing terminal (200) communicate with each other through the reader/writer apparatus (300) when the information processing terminal (200) is within a predefined distance from the reader/writer apparatus (300).

15. An information processing method, comprising:
storing distribution information in an information processing apparatus (400), the distribution information including benefit information;
storing, in a memory (240) disposed within an information processing terminal (200), a coupon identifier (ID) which identifies the benefit information;
transmitting, from the information processing apparatus (400) to the information processing terminal (200), a request for the coupon ID;
receiving, at the information processing terminal (200), the request for the coupon ID;
reading, from the memory (240) disposed within the information processing terminal (200), the coupon ID based on the received request;
transmitting, from the information processing terminal (200) to the information processing apparatus (400), the coupon ID; and
receiving, at the information processing apparatus (400), the coupon ID.
